**Europäisches Patentamt**

**European Patent Office**

**Office européen des brevets**

(19)

(11) Veröffentlichungsnummer : **0 397 674 B1**

## (12) EUROPÄISCHE PATENTSCHRIFT

(45) Veröffentlichungstag der Patentschrift :
**02.09.92 Patentblatt 92/36**

(51) Int. Cl.$^5$ : **B29C 45/04**

(21) Anmeldenummer : **89900167.1**

(22) Anmeldetag : **16.12.88**

(86) Internationale Anmeldenummer :
**PCT/AT88/00112**

(87) Internationale Veröffentlichungsnummer :
**WO 89/05719 29.06.89 Gazette 89/14**

(54) VERFAHREN UND ANLAGE ZUR HERSTELLUNG VON FORMTEILEN AUS KUNSTSTOFF.

(30) Priorität : **17.12.87 AT 3324/87**

(43) Veröffentlichungstag der Anmeldung :
**22.11.90 Patentblatt 90/47**

(45) Bekanntmachung des Hinweises auf die
Patenterteilung :
**02.09.92 Patentblatt 92/36**

(84) Benannte Vertragsstaaten :
**AT BE CH DE FR GB IT LI LU NL SE**

(56) Entgegenhaltungen :
**DE-B- 1 145 786**
**DE-B- 2 254 356**
**US-A- 3 973 891**
**US-A- 3 982 869**

(73) Patentinhaber : **Sticht, Walter**
**Karl-Heinrich-Waggerl-Strasse 8**
**A-4800 Attnang-Puchheim (AT)**

(72) Erfinder : **Sticht, Walter**
**Karl-Heinrich-Waggerl-Strasse 8**
**A-4800 Attnang-Puchheim (AT)**

(74) Vertreter : **Wolke, Heidemarie, Dr.**
**Stadtplatz 7**
**A-4400 Steyr (AT)**

EP 0 397 674 B1

## Beschreibung

Die Erfindung betrifft ein Verfahren zur Herstellung von Formteilen aus Kunststoff, bei welchem der Kunststoff mit einer Abgabevorrichtung in ein Formnest eines aus einem Basiswerkzeugteil und mehreren Mobilwerkzeugteilen bestehenden Werkzeuges eingebracht wird und im Formnest bis zum Erreichen einer ausreichenden Formhaltigkeit gehalten wird, worauf der Formteil ausgestoßen wird sowie eine Vorrichtung zur Durchführung des Verfahrens, wie sie aus der DE-B-11 45 786 bekannt sind.

Bei einem bekannten Verfahren und einer zur Durchführung desselben geeigneten Vorrichtung gemäß DE-B-11 45 786 sind zum Herstellen von Kunststoffteilen einem Basiswerkzeugteil mehrere auf einer verdrehbaren Tischplatte fix angeordnete Mobilwerkzeugteile zugeordnet. Die Tischplatte wird schrittweise verdreht, sodaß nacheinander die Mobilwerkzeugteile mit dem Basiswerkzeugteil verbunden und in die entsprechenden Formhohlräume Kunststoff eingespritzt werden kann. Nachteilig ist, daß bei diesem Verfahren und der bekannten Vorrichtung die Taktzeit an den auch vom Basiswerkzeugteil entferneten Mobilwerkzeugteilen von der Taktzeit für die Herstellung des Formteiles abhängig ist.

Zum Herstellen von Formteilen aus Kunststoff, die eine größere Zykluszeit zwischen dem Einbringen des flüssigen Kunststoffes in das Formnest und dem Entnehmen des Formteiles benötigen, ist es bereits bekannt, sogenannte Formkarusselle zu verwenden. Diese bestehen meist aus einem Drehtisch, auf dem am Umfang distanziert voneinander in genau gleichen Winkelabständen mehrere Formen hintereinander angeordnet sind. Die der Abgabevorrichtung gegenüberliegende Form wird mit Kunststoff gefüllt, wonach der Drehtisch um eine Teilung weitergeschwenkt wird, sodaß die nächste Form mit flüssigem Kunststoff gefüllt werden kann. Währenddessen wird im Bereich der anderen Former die Form geöffnet, der Formteil entnommen, das Formnest gereinigt und wieder mit Trennmittel beschichtet. Derartige Verfahren und Anlagen sind im großen Umfang im Einsatz, der Aufwand für die Herstellung einer Vielzahl von vollständigen Formen ist jedoch relativ hoch, ebenso ist der Platzbedarf, falls mehrere Arbeitsvorgänge hintereinander ausgeführt werden sollen, sehr groß.

Der vorliegenden Erfindung liegt nunmehr die Aufgabe zugrunde, ein Verfahren und eine Anlage zur Herstellung von Formteilen aus Kunststoff zu schaffen, die bei einer kurzen Spritzzeit für den einzelnen Formteil mit einem geringen Schließdruck das Auslangen finden. Weiters soll ein universeller Einsatz des Verfahrens und der Anlage auch bei kleinen Formteilen mit kurzer Spritzzeit ermöglicht sein. Darüberhinaus sollen die zwischen den einzelnen Spritzvorgängen benötigten Arbeiten möglichst taktungebunden vom tatsächlichen Spritzvorgang durchführbar sein.

Diese Aufgabe der Erfindung wird dadurch gelöst, daß daß die Mobilwerkzeugteile unabhängig voneinander entlang einer Seiten- und bzw. oder Höhenführungsbahn einer Transporteinrichtung verfahrbar und aufeinanderfolgend in den Arbeitsbereich des Basiswerkzeugteiles verbracht und zumindest in diesem mit einem Kühl- und bzw. oder Heizkreislauf verbunden werden und die Werkzeugteile zu einem geschlossenen Formnest zusammengefügt werden, worauf der Kunststoff in das Formnest eingebracht wird, und daß nach Ablauf einer Reaktionszeit der Basiswerkzeugteil und der Mobilwerkzeugteil voneinander getrennt und der Mobilwerkzeugteil mit dem Formteil unabhängig von den anderen Mobilwerkzeugteilen einer weiteren Behandlung und ein nachfolgender Mobilwerkzeugteil mit leerem Formnest mit dem Basiswerkzeugteil verbunden und dem leeren Formnest Kunststoff zugeführt wird. Die Vorteile dieser überraschend einfach scheindenen Lösung liegen darin, daß jeweils nur ein Werkzeugteil in mehrfacher Ausführung benötigt wird, während der andere Werkzeugteil nur im Bereich der Abgabevorrichtung vorhanden ist. Die Vervielfältigung des anderen Werkzeugteiles ermöglicht aber in vorteilhafter Weise, daß unmittelbar nach der ersten Aushärtungsphase bzw. dem Abschluß der Formgebungsphase der eine Werkzeugteil abgehoben werden kann, während der Formteil im anderen Werkzeugteil noch beliebig lange verbleiben kann, bis die Abkühlungsphase vollständig abgeschlossen ist. Während dieser Zeit ist es jedoch möglich, diesen Formteil mit den Werkstückträgern zu beliebigen Arbeitsstellen zu transportieren, wo weitere Montage-, Beschriftungs- oder Beschichtungsvorgänge, wie Lackierungen und dgl., oder beispielsweise bereits weitere Teile auf den Spritzteil aufgebracht werden können. Durch eine entsprechend große Anzahl von Formwerkzeugteilen ist es daher möglich, diese gleichzeitig als Halterung für den Formteil für nachfolgende Bearbeitungsvorgänge zu verwenden. Außerdem kann eine der Aushärtezeit entsprechende Einspannung des Formteiles erreicht werden, ohne daß der Spritzzyklus dadurch nachteilig verändert wird. Auch die Temperaturbehandlung der Formteile kann über dem gesamten Arbeitsbereiech in beliebiger Form erfolgen, sodaß gewünschte Kühlabläufe und Erhärtungsvorgange der Formteile möglich sind. Weiters ist es durch diese Art der Bearbeitung einfach möglich, maschinentaktungebunden auch manuelle Arbeitskräfte einzusetzen, die das Reinigen der Formnester und das Beschichten der Formnester mit Trennmittel übernehmen können. Darüberhinaus ist es nunmehr in sehr einfacher Weise möglich, während eines taktungebundenen Arbeitsverfahrens durch manuelle Arbeitskräfte Einzelteile, die bei dem Verfahren in den Formteil eingeformt bzw. von dem Kunststoff umgeformt werden soll, in die Formnester einzulegen.

Weiters ist es aber auch möglich, daß die Mobilwerkzeugteile auf einer Seiten- und/oder Höhenführungsbahn einer Transporteinrichtung geführt sind und der Basiswerkzeugteil senkrecht zu diesen verstellbar ist, wobei vorzugsweise ein Teil der Schließkraft über die Transporteinrichtung in ein Fundament abgeleitet wird, wodurch die Werkzeugteile mit hoher Genauigkeit im Bereich der Arbeitsstelle, in der sie zum Formnest zusammengefügt werden, zueinander zentriert sind, wobei die Anlage durch die Übernahme eines Teiles der Schließkraft durch die Transporteinrichtung einfacher aufgebaut werden kann.

Von Vorteil sind auch die weiteren Maßnahmen, nach welchen die Abgabevorrichtung während oder nach dem Kuppeln des Basiswerkzeugteiles mit dem Mobilwerkzeugteil mit dem Formnest oder einem Anguß für das Formnest gekuppelt wird, da dadurch jeweils nur die den flüssigen Kunststoff abgebenden Teile und der stationär angeordnete Formwerkzeugteil bewegt werden müssen, um das Formnest zu bilden bzw. das Formnest mit flüssigem Kunststoff zu beschicken.

Weiters ist es aber auch möglich, daß die Abgabevorrichtung senkrecht zum Basiswerkzeugteil und bzw. oder der Transporteinrichtung verstellt wird. Durch die unterschiedliche Richtung der Bewegung des Formwerkzeugteiles und der Abgabevorrichtung sowie des mit der Transporteinrichlung verfahrbaren Werkzeugteiles wird die Schließund Öffnungszeit, also jene Zeit, die benötigt wird, um vor dem Einbringen des flüssigen Kunststoffes bzw. nach dessen Einbringen die Werkzeugteile in ihre.gewünschte Lage zueinander und danach.in eine Lage voneinander zu bringen sehr kurz gehalten werden kann, sodaß der mit der Transporteinrichtung bewegte Spritzwerkzeugteil im Antriebsbereich nur möglichst kurz angehalten werden muß.

Nach einer anderen Ausführungsvariante des Verfahrens ist vorgesehen, daß die Mobilwerkzeugteile spielfrei geführt sind und in einer mit dem Basiswerkzeugteil fluchtenden Stellung angehalten bzw. positioniert werden, worauf der Basiswerkzeugteil gegen den Mobilwerkzeugteil gepreßt und dabei gegebenenfalls der Mobilwerkzeugteil und der Basiswerkzeugteil gegeneinander zentriert werden und daß nach der Herstellung des Formteiles der Basiswerkzeugteil vom Mobilwerkzeugteil abgehoben und der Mobilwerkzeugteil zum nächsten Arbeitsbereich transportiert wird. Dieser Ablauf des Verfahrens zeichnet sich vor allem dadurch aus, daß eine ziemlich genaue Positionierung des mit der Transporteinrichtung verfahrbaren Werkzeugteiles erreicht wird. Darüberhinaus kann die Feinstjustierung, die bei derartigen Werkzeugen für Formnester im Bereich von 0,001 mm und darunter liegt, während des Zusammenfahrens der beiden Werkzeugteile erreicht wird.

Weiters ist es auch vorteilhaft, wenn in einem vom Basiswerkzeugteil distanzierten Arbeitsbereich der Formteil aus dem Formnest im Mobilwerkzeugteil ausgestoßen wird, da dadurch während des Transportes des Formteiles von der Abgabevorrichtung bis in den Bereich, in welchen er ausgestoßen wird, der Formteil weiter abkühlen und sich weiter verfestigen kann, ohne daß die Spritzzykluszeit dadurch verlängert wird.

Vorteilhaft ist es aber auch, wenn auf einem Werkstückträger mehrere Mobilwerkzeugteile oder Formnester angeordnet sind, die insbesondere gleichzeitig mit dem Basiswerkzeugteil verbunden und vorzugsweise aufeinanderfolgend mit der Abgabevorrichtung verbunden werden, da dadurch beim Durchtakten eines Werkstückträgers durch einen Arbeitsbereich mehrere auf diesen hintereinander angeordnete Formnester mit dem flüssigen Kunststoff gefüllt und Formteile hergestellt werden können. Dadurch können die Wechselzeiten zwischen der Herstellung einzelner Formteile verkürzt werden und es ist außerdem nur eine Abkühlzeit erforderlich, da das Formwerkzeug über die gesamte Dauer der Füllung der einzelnen Formnester geschlossen bleibt. Dadurch wird beispielsweise beim Herstellen mehrerer Formteile, die eine längere Abkühlzeit brauchen, bevor die beiden Werkzeugteile geöffnet werden können, nur einmal diese längere Verweilzeit, nämlich beim letzten Formnest, benötigt, wird die sich auf die Mehrzahl der im Werkstückträger vorhandenen Formteile verteilt.

Nach einer anderen Ausführungsvariante ist vorgesehen, daß die im Formnest des Mobilwerkzeugteiles gehaltenen Formteile bearbeitet und/oder mit weiteren Teilen verbunden bzw. zusammenmontiert werden, wodurch das Formnest gleichzeitig als Halterung für den Basisteil eines herzustellenden, aus mehreren Teilen bestehenden Bauteiles verwendet werden kann. Dadurch werden zusätzliche teure Halterungen und Aufnahmen für Montagewerkstückträger eingespart, sodaß der höhere Aufwand für eine geringfügig höhere Zahl von Werkzeugträgern gerechtfertigt ist.

Weiters ist es auch möglich, daß der Formteil insbesondere nach der Montage von weiteren Teilen aus dem Formnest des Mobilwerkzeugteiles entfernt wird und danach das Formnest gereinigt und mit Trennmittel beschichtet wird, wodurch unabhängig von der Abgabevorrichtung auch die Reinigung und Beschichtung des Formnestes mit Trennmittel erfolgen kann.

Nach einer anderen Variante des Verfahrens ist vorgesehen, daß nach dem Reinigen des Formnestes im Mobilwerkzeugteil bevorzugt automatisch ein Teil positioniert wird, worauf der Mobilwerkzeugteil dem Basiswerkzeugteil zugeführt wird, wodurch die taktungebundene Bearbeitungsmöglichkeit auch zum Positionieren von Einlageteilen in Formteilen einfach verwendet werden kann und dafür auch manuelle Arbeitskräfte eingesetzt werden können, da sie bei Verwendung einer losen Verkettung für die Werkstückträger nicht an den Maschinentakt der Abgabevorrichtung gebunden sind. Die bei manuellen Arbeitskräften anfallenden Verweilzeiten, wie Toilettengänge, Materialbeschaffung und dgl., können durch entsprechende Werkstückträgerpuffer zwischen dem manuellen Arbeitsplatz und der Abgabevorrichtung überbrückt werden.

EP 0 397 674 B1

Nach einer anderen Ausführungsform ist vorgesehen, daß nach der Herstellung des Formteiles der Mobilwerkzeugteil einem Arbeitsbereich zugeführt wird, in dem der Formteil manuell entnommen wird, dadurch kann bei komplizierten Formteilen auch das Entnehmen des Formteiles durch die manuelle Arbeitskraft unterstützt werden, wodurch vielfach hochkomplizierte Vorrichtungen, beispielsweise mit eingelegten Kernen und dgl., einfacher bearbeitet werden können.

Vorteilhaft ist es aber auch, wenn nach der Herstellung des Formteiles dieser mit dem Mobilwerkzeugteil einem Arbeitsbereich zugeführt wird, in dem der Formteil einer Temperaturbehandlung unterzogen wird, da dadurch im Zuge der Nachbehandlung des Formteiles in seiner zumindest zum Großteil in die Form eingespannten Lage eine Temperaturbehandlung mit Temperung oder dgl. erfolgen kann.

Die Erfindung umfaßt auch eine Anlage zur Herstellung von Formteilen aus Kunststoff mit einer Abgabevorrichtung für den Kunststoff und einem mehrteiligen Werkzeug mit einem Basiswerkzeugteil und einem Mobilwerkzeugteil und einer diesen zugeordneten Ausstoßvorrichtung für die Formteile zur Durchführung des Verfahrens. Diese Anlage ist dadurch gekennzeichnet, daß mehrere gleichartige Mobilwerkzeugteile auf voneinander distanzierten, unabhängig voneinander verfahrbaren Werkstückträgern einer Transporteinrichtung angeordnet und mit einem Heiz- und bzw. oder Kühlkreislauf versehen sind, und daß dem Werkstückträger in einem, dem Basiswerkzeugteil zugeordneten Arbeitsbereich eine Positioniervorrichtung zugeordnet ist und daß der Mobilwerkzeugteil und der Basiswerkzeugteil über eine Verstellvorrichtung relativ zueinander verstellbar gelagert sind. Durch die Ausbildung der Anlage wird in vorteilhafter Weise erreicht, daß mit der Transporteinrichtung die Werkzeugteile bereits so exakt positioniert werden können, daß eine Verbindung der Werkzeugteile mit der für derartige Formnester bzw. Formen erforderlichen Genauigkeit einwandfrei möglich ist. Durch die Verwendung einer Transporteinrichtung für das Verfahren der Werkzeugteile kann mit der Abgabevorrichtung für den Kunststoff eine beliebig große Nachfolgeanlage verbunden werden, in die bei Verwendung einer "losen" Verkettung für die Werkstückträger, die die Werkzeugteile aufnehmen, auch manuelle Arbeitsplätze eingeschaltet werden können. Dies deshalb, da durch die lose Verkettung keine starre Taktverkettung mit der Abgabeeinrichtung, also der Kunststoffspritz- oder Extrusionsmaschine, gegeben ist. Darüberhinaus können die für die Kunststoffverarbeitung günstigen Temperaturen einfach eingehalten werden.

Vorteilhaft ist es weiters, wenn zwischen dem Basiswerkzeugteil und dem Mobilwerkzeugteil eine Zentrier- und/oder Arretiervorrichtung angeordnet ist, da dadurch ein Großteil der beim Füllen des Formnestes mit flüssigem Kunststoff bzw. bei der Redaktion desselben auftretenden Kräfte durch eine direkte Bewegungsverbindung zwischen den zwei Werkzeugteilen aufgenommen werden kann.

Nach einer weiteren Ausführungsform ist vorgesehen, daß die Ausstoßer in dem mit dem Werkstückträger verbundenen Mobilwerkzeugteil angeordnet sind. Dadurch, daß die Ausstoßer in dem mit der Transporteinrichtung bewegten Werkzeugteil angeordnet sind, können an beliebiger Stelle im Zuge der Transporteinrichtung die Formteile aus dem Formnest ausgestoßen werden. Dadurch kann die für den verwendeten Kunststoff und entsprechend der Charakteristik des Formteiles günstigste Entformzeit bzw. der Entformzeitpunkt festgelegt werden. Durch eine Betätigung der Ausstoßer von unterhalb der Führungsbahn der Transporteinrichtung ist ohne Störung der Fortbewegung derselben an jeder beliebigen Stelle der Transporteinrichtung eine Entnahme möglich.

Vorteilhaft ist es weiters, wenn der Mobilwerkzeugteil den Werkstückträger bildet, da das Formnest gleichzeitig zur Halterung des Formteiles für nachfolgende Bearbeitungen zur Montage, zur Beschriftung oder zur mechanischen Bearbeitung verwendet werden kann.

Es ist aber auch möglich, daß die Abgabevorrichtung in einer Führungsanordnung mit einem Zustellantrieb verstellbar gelagert ist. Dadurch kann die Bewegung der Abgabeeinrichtung bzw. der damit verbundenen Schneckenanordnung oder des Extruders auf das absolute Mindestmaß verringert werden, unabhängig davon, welcher Verstellweg zum Teilen der Werkzeugteile erforderlich ist.

Vorteilhaft ist es weiters, wenn eine Verstellrichtung der Verstellvorrichtung, eine Zustellrichtung der Führungsanordnung und eine Vorschubrichtung der Werkstückträger der Transporteinrichtung winkelig, insbesondere senkrecht, zueinander verlaufen, da dadurch eine gegenseitige Behinderung der Verstellvorgänge der einzelnen Teile der Vorrichtung zum Großteil verhindert werden kann, wodurch die Zeit zwischen dem Einlaufen des Werkzeugteiles im Arbeitsbereich der Abgabevorrichtung und dem Beginn des Einbringens des Kunststoffes sowie die Zeit nach dem Ende des Einbringen des Kunststoffes, bis der Werkzeugteil die Arbeitsstelle verlassen kann, kurz gehalten werden kann.

Nach einer weiteren Ausführungsform ist vorgesehen, daß die Transporteinrichtung Seiten- und Höhenführungsbahnen und ein Antriebssystem für die Werkstückträger aufweist. Dadurch ist eine Fortbewegung der Werkstückträger außerhalb der Abgabestelle der Abgabevorrichtung in beliebiger Weise möglich.

Vorteilhaft ist es, wenn entlang der Transporteinrichtung mehrere Arbeitsbereiche in Vorschubrichtung distanziert voneinander angeordnet sind, da dadurch der Formteil unmittelbar nach seiner Herstellung verschiedenen Montage- bzw. Bearbeitungsoperationen direkt zugeführt werden kann, ohne daß zwischendurch eine

4

Manipulation oder Zwischenlagerung notwendig ist.

Nach einer anderen Ausführungsvariante ist vorgesehen, daß in einem Arbeitsbereich eine Antriebsvorrichtung einer Ausstoßvorrichtung für die im Mobilwerkzeugteil angeordneten Ausstoßer vorgesehen ist. Dadurch kann an beliebiger Stelle der Transporteinrichtung der Formteil aus der Form ausgestoßen werden.

Von Vorteil ist es weiters, wenn in einem Arbeitsbereich eine Montagevorrichtung zum Fügen und/oder Verbinden eines weiteren Einzelteiles mit dem Formteil angeordnet ist, da dadurch einfache Montageoperationen unmittelbar anschließend an die Herstellung des Formteiles erfolgen können und am Ende der angeordneten Arbeitsbereiche eine vormontierte Baugruppe oder ein fertiger Bauteil vorliegt.

Es ist weiters aber auch möglich, daß in einem Arbeitsbereich eine Bearbeitungsvorrichtung für den in einem Formnest enthaltenen Formteil angeordnet ist, wodurch die Außenform bzw. Führungsflächen des Formteiles unmittelbar nach dessen Formgebung oder, wenn dies zweckmäßig ist, vor dessen endgültiger Erhärtung bearbeitet werden können.

Vorteilhaft ist es weiters, wenn in einem Arbeitsbereich eine Reinigungsvorrichtung für das Formnest im Mobilwerkzeugteil angeordnet ist, wodurch vor dem Eintreffen des Werkzeugteiles im Bereich der Abgabevorrichtung dieser bereits für das Einbringen des weiteren Kunststoffes verwendet werden kann.

Nach einer anderen Ausführungsform ist vorgesehen, daß das Formnest als Montageaufnahme ausgebildet ist, wodurch die Herstellung komplizierter Aufnahmen für Formteile zur weiteren Bearbeitung bzw. Montage eingespart werden können.

Vorteilhaft ist es weiters, wenn der Basiswerkzeugteil mit einer parallel zur Vorschubrichtung der Transporteinrichtung verlaufenden Nachführvorrichtung verbunden ist, wodurch eine "kontinuierliche" Produktion von Formteilen möglich wird, ohne daß der Werk- stückträger bzw. die Werkzeugteile während der Herstellung des Formteiles angehalten werden müssen. Der Vorteil dieser Vorrichtung liegt darin, daß die Zeiten zum Anhalten der Werkstückträger und Werkzeugteile die Zykluszeit zur Herstellung des Formteiles nicht nachteilig verändern.

Nach einer anderen Weiterbildung ist vorgesehen, daß in einem Mobilwerkzeugteil auf einem Werkstückträger mehrere Formnester in Vorschubrichtung der Transporteinrichtung hintereinander angeordnet sind, wodurch beispielsweise bei Formteilen, die eine längere Aushärtzeit bei geschlossener Form benötigen, der Zeitaufwand durch die Herstellung von mehreren Formteilen in einer Form verringert werden kann, da die volle Aushärtzeit nur für den letzten Formteil in einem Werkstückträger zum Tragen kommt und dadurch die Gesamtzykluszeit auf die mit einem Werkzeugteil hergestellten Formteile aufgeteilt wird.

Schließlich ist es auch von Vorteil, wenn im Formnest des Mobilwerkzeugteiles entnehmbare und bzw. oder gegenüber diesem verstellbare Einlageteile und bzw. oder Kerne angeordnet sind, da dadurch das Ziehen von Kernen bzw. das Entformen von Teilbereichen und Entnehmen von Kernteilen sowohl manuell als auch automatisch abgestuft, je nach dem Erhärtungsfortschritt des im Werkzeug hergestellten Formteiles, möglich ist.

Zum besseren Verständnis der Erfindung wird diese nachfolgend anhand der in den Zeichnungen dargestellten Ausführungsbeispielen näher erläutert.

Es zeigen:

Fig.1 eine erfindungsgemäße Anlage zur Herstellung von Formteilen aus Kunststoff, in Draufsicht und vereinfachter schematischer Darstellung;

Fig.2 ein der Abgabevorrichtung für den Kunststoff zugeordneter Arbeitsbereich der erfindungsgemäßen Anlage in schaubildlicher und stark vereinfachter schematischer Darstellung;

Fig.3 einen erfindungsgemäß ausgebildeten Werkstückträger mit einem Mobilwerkzeugteil in Seitenansicht, geschnitten;

Fig.4 einen Werkstückträger mit einem erfindungsgemäß ausgebildeten Mobilwerkzeugteil in Stirnansicht, teilweise geschnitten, in einem Arbeitsbereich zum Austoßen des Formteiles;

Fig.5 eine andere Ausführungsform einer Anlage zum Herstellen von Formteilen aus Kunststoff in Draufsicht und vereinfachter schematischer Darstellung;

Fig.6 die Anlage im Bereich einer Abgabevorrichtung in Stirnansicht, teilweise geschnitten gemäß den Linien VI-VI in Fig.5;

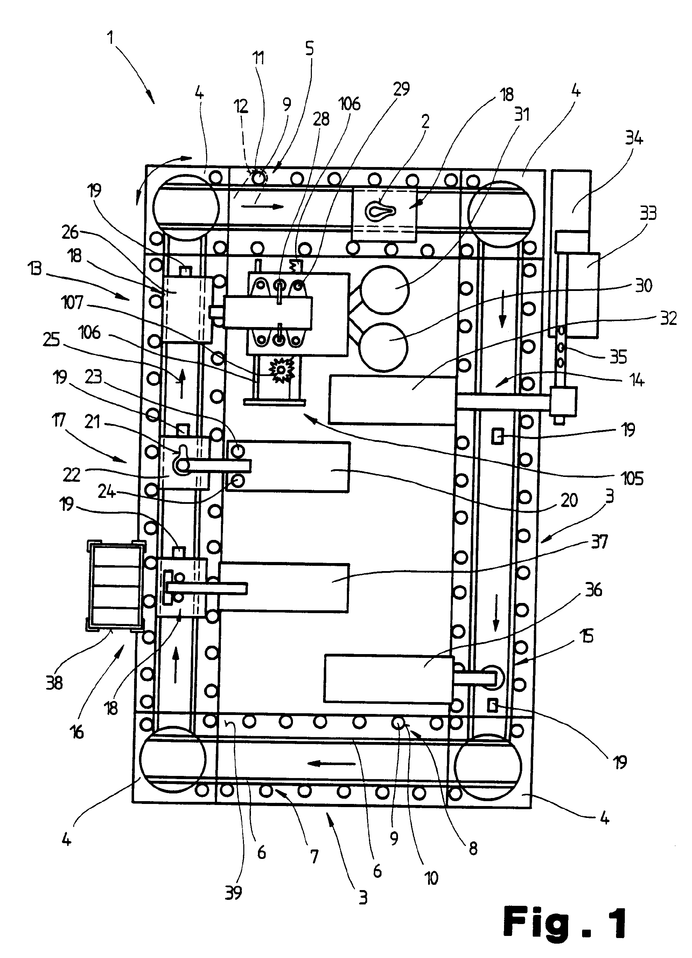

In Fig.1 ist eine Anlage 1 zur Herstellung von Formteilen 2 aus Kunststoff ersichtlich. Diese Anlage 1 kann aus einer Mehrzahl von Tischmodulen 3 und Umlenkmodulen 4 zusammengesetzt sein. Unter Modul wird dabei eine funktionsfähige Einheit verstanden. Ein Tischmodul 3 umfaßt dazu zumindest eine Tischplatte, ein Tischgestell und eine Führungsbahn für die Werkstückträger. Das Umlenkmodul 4 weist zusätzlich eine Einheit zum Umlenken von Werkstückträgern auf. Eine mögliche Ausführungsform dieser Tischmodule 3 und Umlenkmodule 4 ist beispielsweise in der DE-PS 27 56 422, der DE-PS 27 60 217, der DE-OS 35 02 868 und der DE-OS 35 02 820 des gleichen Anmelders beschrieben, wozu zur Vermeidung von Wiederholungen verwiesen wird und die gleichzeitig zum Inhalt der vorliegenden Anmeldung gemacht werden.

Diese Tischmodule 3 und Umlenkmodule 4 umfassen auch eine Transporteinrichtung 5, die Höhenführungsbahnen 6 sowie Seitenführungsbahnen 7,8 aufweist. Während die Seitenführungsbahn 8 durch um vertikale Achsen 9 drehbar gelagerte Führungsrollen 10 gebildet ist, besteht die Seitenführungsbahn 7 im in Fig.1 gezeigten Ausführungsbeispiel aus Anpreßrollen 11, die in radialer Richtung elastisch verformbar sind und ebenfalls um Achsen 9 über ein Antriebssystem 12 in Drehung versetzt werden können. Hinsichtlich möglicher Anordnungen und Ausbildungen der Führungs- bzw. Anpreßrollen 10,11 sowie der Höhenführungsbahnen 7 und Seitenführungsbahnen 8 wird zur Vermeidung von Wiederholungen auf die DE-PS 27 56 422, die DE-PS 27 60 217, die DE-OS 33 04 091 und die DE-OS 34 11 452 desselben Anmelders Bezug genommen.

Entlang der Tischmodule 3 und Umlenkmodule 4 sind verschiedene Arbeitsbereiche 13 bis 17 vorgesehen, in welchen Werkstückträger 18 über Positioniervorrichtungen 19 zur Bearbeitung, Montage und Reinigung angehalten werden können. Um gleichzeigig mit der Beschreibung der Anlage 1 auch den Verfahrensablauf leichter erläutern zu können, wird die Beschreibung der Anlage 1 im Arbeitsbereich 17 begonnen. In diesem Arbeitsbereich 17 ist eine Reinigungsvorrichtung 20, zum Beispiel bestehend aus rotierenden Bürsten, Blas- und Absaugeinheiten, angeordnet, mit der ein Formnest 21 eines Mobilwerkzeugteiles 22 von Rückständen vom vorherigen Herstellungsvorgang eines Formteiles 2 befreit und mit einem Trennmittel beschichtet werden kann. Die Reinigungsvorrichtung 20 weist hierzu einen Speicherbehälter 23 für Druckluft und einen Vorratsbehälter 24 für ein Trennmittel auf. Dieses wird über Leitungen den rotierenden Bürsten bzw. Sprühdüsen der Reinigungsvorrichtung 20 zugeführt.

Dem in Vorschubrichtung 25 distanziert nachgeordneten Arbeitsbereich 13 ist ebenfalls eine Positioniervorrichtung 19 zugeordnet, mit der der Werkstückträger 18 in einer exakt vorherbestimmbaren Position festgehalten wird. Nachdem der Werkstückträger 18 und das auf diesem angeordnete Mobilwerkzeugteil 22 sich in der exakten Position befindet, wird ein Basiswerkzeugteil 26 gemeinsam mit einer Abgabevorrichtung 27 auf dem Mobilwerkzeugteil 22 aufgesetzt. Die Höhenverstellung der Abgabevorrichtung 27 mit dem Basiswerkzeugteil 26 erfolgt über eine zum Beispiel druckmittelbetätigbare Verstellvorrichtung 28, wobei die Abgabevorrichtung 27 entlang von Führungssäulen 29 geführt ist. Mit der Abgabevorrichtung 27 sind Tanks 30,31 bzw. Silos verbunden, in denen sich das flüssige oder feste Rohmaterial für den Kunststoff, aus welchen der Formteil hergestellt wird, befindet. So kann beispielsweise die Abgabevorrichtung 27 durch eine aus dem Stand der Technik in vielfältigen Ausführungsformen bekannte Kunststoffspritzgußmaschine oder eine Kunststoffschäummaschine oder dgl. gebildet sein.

Der Werkstückträger 18 wird dann von dem Arbeitsbereich 13 über das Umlenkmodul 4 in den Arbeitsbereich 14 zugeführt, in welchem eine Montagevorrichtung 32 angeordnet ist. Diese ist beispielsweise durch einen Montageroboter oder eine Handhabungsvorrichtung mit mehreren, in unterschiedlichen Richtungen zueinander verstellbaren, linearen Achsen gebildet. Mit der Montagevorrichtung 32 können über eine Zuführvorrichtung 33 aus einem Speicher 34 vereinzelt zugeführte Einzelteile 35 in bzw. am Formteil 2 positioniert werden. Danach wird beispielsweise der Werkstückträger 18 bis zum Anschlag an der Positioniervorrichtung 19 im Arbeitsbereich 15 vorwärtsbewegt. Diesem Arbeitsbereich 15 ist eine Bearbeitungsvorrichtung 36 zugeordnet, mit der der Einzelteil 35 mit dem Formteil 2, beispielsweise durch eine Ultraschallverschweißung, verbunden werden kann.

Danach wird der Werkstückträger 18 bis zur Anlage an die Positioniervorrichtung 19 im Arbeitsbereich 16 verbracht. In diesem Arbeitsbereich 16 ist eine Entnahmevorrichtung 37, die beispielsweise wieder durch einen Roboter oder ein Handhabungsgerät gebildet ist, vorgesehen, die den aus dem Mobilwerkzeugteil 22 ausgestoßenen Formteil 2 ergreift, wie beispielsweise schematisch angedeutet in einer Palette 38 vereinzelt oder auch im Haufwerk ablegt.

Von dem Arbeitsbereich 16 wird dann der Werkstückträger 18 wieder dem Arbeitsbereich 17 zur Reinigung und zum Beschichten des Formnestes mit Trennmittel zugeführt.

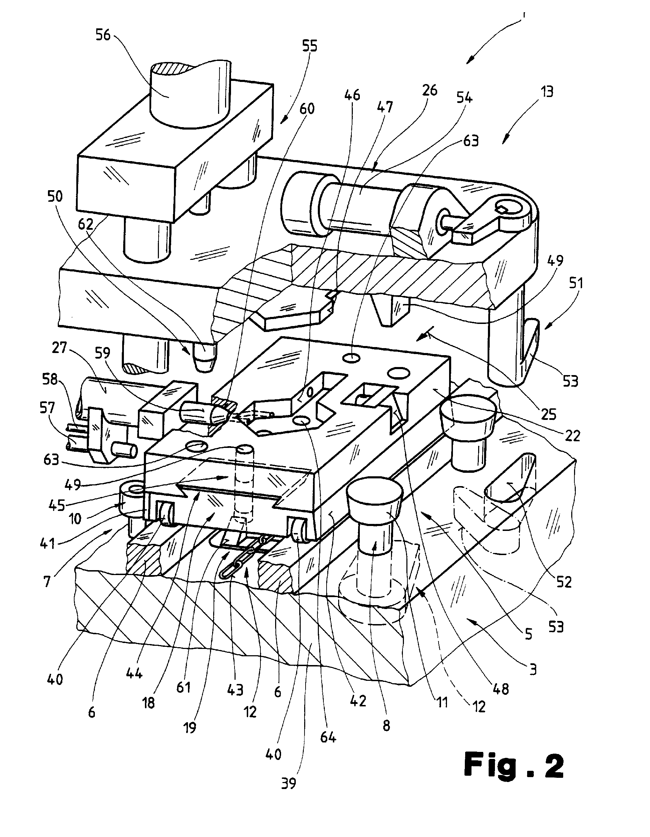

In Fig.2 ist ein Arbeitsbereich 13 einer Anlage 1 zum Herstellen von Formteilen aus Kunststoff gezeigt. Aus dieser Darstellung sind die durch Führungsleisten gebildeten Höhenführungsbahnen 6, die durch Führungsrollen 10 und Anpreßrollen 11 gebildeten Seitenführungsbahnen 7,8 der Transporteinrichtung 5 sowie eine Tischplatte 39 des Tischmoduls 3, ersichtlich. Ein Werkstückträger 18 ist über Führungsrollen 40 auf der Höhenführungsbahn 6 abgestützt. Den Führungsrollen 10 der Seitenführungsbahn 7 ist eine Stützleiste 41, zum Beispiel eine gehärtete Stahlleiste, zugeordnet, während die in radialer Richtung elastischen Anpreßrollen 11 an einer Seitenflanke 42 des Werkstückträgers 18 anliegen. Als Antriebssystem 12 dient ein, den Anpreßrollen 11 zugeordnetes Kettenantriebssystem oder eine, wie schematisch angedeutet, den Werkstückträgern 18 zugeordnete Förderkette 43. Auf dem Werkstückträger 18 ist über eine Zentriervorrichtung 44 der Mobilwerkzeugteil 22 gelagert. Zur exakten Halterung gegenüber dem Werkstückträger 18 ist eine Arretiervorrichtung 45 vorgesehen, die durch einen Paßstift gebildet ist. Der Mobilwerkzeugteil 22 ist mit einem Formnest 46 versehen, in welches ein Kern 47 des Basiswerkzeugteiles 26 eingreift. Weiters ist im Mobilwerkzeugteil 22 ein verschiebbarer Kern 48 angeordnet, der nach dem Einsetzen des Kerns 47 in das Formnest 46 quer zur Vorschubrichtung 25 über einen Mitnehmer 49 im Basiswerkzeugteil 26 verstellbar ist. Zum Zentrieren des

6

Basiswerkzeugteiles 26 mit dem Mobilwerkzeugteil 22 ist eine Zentriervorrichtung 50, die durch Zentrierstifte gebildet werden kann, vorgesehen. Nach dem Aufsetzen des Basiswerkzeugteiles 26 auf den Mobilwerkzeugteil 22 können diese beiden über eine Arretiervorrichtung 51 mit einem in eine Aufnahmeöffnung 52 eingreifenden Riegel 53 der Arretiervorrichtung gegeneinander verspannt werden. Selbstverständlich kann eine Arretierung auch gegenüber dem Tischmodul 3, dem Umlenkmodul 4 oder auf diesen angeordneten Verstärkungsteilen bzw. direkt in einem mit einem Fundament verbundenen Auflager erfolgen. Der Riegel 53 der Arretiervorrichtung 51 kann über einen Antrieb 54 aus der in vollen Linien gezeichneten Stellung in die im Bereich der Tischplatte 39 gezeigte strichpunktierte Stellung verschwenkt werden. Die Spannfläche zwischen dem Riegel 53 und der Tischplatte 39 kann dabei schräg zur Höhenführungsbahn 6 verlaufen, sodaß mit zunehmender Verdrehung des Riegels 53 eine höhere Verspannung zwischen Basiswerkzeugteil 26 und Mobilwerkzeugteil 22 erfolgt.

Zum Absenken des Kerns 47 in das Formnest 46 ist der Basiswerkzeugteil 26 auf einer Verstellvorrichtung 55 mittels eines Verstellantriebes 56 senkrecht zur Vorschubrichtung 25 verstellbar. Zum Zuführen des flüssigen bzw. plastifizierten Kunststoffes ist die Abgabevorrichtung 27 angeordnet, deren Zustellrichtung quer zur Vorschubrichtung 25 verläuft. Durch die Verschiebung der Abgabevorrichtung 27 entlang der Führungsanordnung 57 mittels eines durch eine Zylinderkolbenanordnung gebildeten Zustellantriebes 58 greift ein Mundstück 59 in eine Angußöffnung 60 des Mobilwerkzeugteiles 22 ein. Nachdem der Mobilwerkzeugteil 22 mit dem Basiswerkzeugteil 26 über die Arretiervorrichtung 51 verriegelt ist, kann über das Mundstück 59 der flüssige bzw. plastifizierte Kunststoff zugeführt werden.

Wie weiters aus der schematischen und zum besseren Verständnis der Funktion der erfindungsgemäßen Anlage stark vereinfachten Darstellung ersichtlich, kann der Paßstift, der als Arretiervorrichtung 45 zwischen dem Mobilwerkzeugteil 22 und dem Werkstückträger 18 dient, gleichzeitig auch als Anschlagstift für einen Anschlag 61 der Positioniervorrichtung 19 verwendet werden. Dadurch wird sichergestellt, daß die Position des Mobilwerkzeugteiles 22 unabhängig von etwaigen Toleranzen im Werkstückträger 18 mit hoher Präzision erreicht werden kann.

Aus der Darstellung ist weiters auch ersichtlich, daß die Anpreßrollen 11 konisch ausgebildet sind und mit zunehmenden Abstand von der Höhenführungsbahn 6 einen größeren Durchmesser aufweisen. Gleichfalls ist die Seitenflanke 42 des Werkstückträgers 18 mit zunehmenden Abstand von der Höhenführungsbahn 6 in Richtung des Formnestes 46 geneigt. Durch das Zusammenwirken der konischen Anpreßrollen 11 und der Seitenflanke 42 wird der Werkstückträger 18 mit den Führungsrollen 40 spielfrei auf der Höhenführungsbahn 6 geführt. Gleichzeitig wird durch die elastische Ausbildung der Anpreßrollen 11 in radialer Richtung der Werkstückträger 18 spielfrei gegen die Führungsrollen 10 gepreßt. Dies bewirkt in Verbindung mit dem Anschlag 61 eine äußerst exakte Positionierung des Mobilwerkzeugteiles 22. Die erzielbare Genauigkeit liegt bei +/-0,01 mm. Dadurch ist es möglich, mittels der Zentrierstifte der Arretiervorrichtung 51 die für das Zusammenwirken zwischen Basiswerkzeugteil 26 und Mobilwerkzeugteil 22 erforderlichen Genauigkeiten von 0,001 mm und mehr zu erreichen.

Um diese exakte Positionierung zwischen Mobilwerkzeugteil 22 und Basiswerkzeugteil 26 zu erreichen, sind mehrere Zentrierstifte 62 der Zentriervorrichtung 50 vorgesehen, die in Zentrierbohrungen 63 des Mobilwerkzeugteiles 22 eingreifen. Im Formnest 46 ist auch schematisch ein Ausstoßer 64 angedeutet, der zum Auswerfen des Formteiles aus dem Formnest 46 dient.

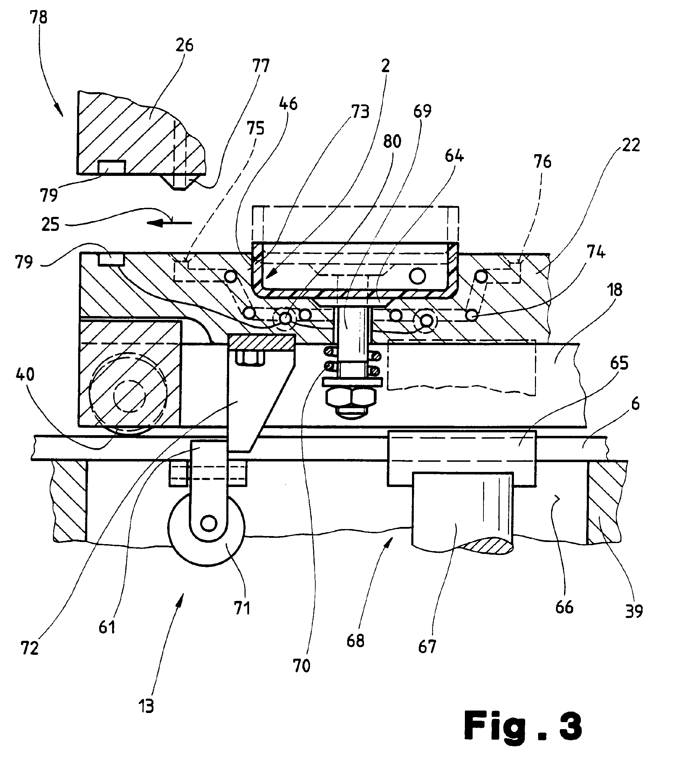

In Fig.3 ist eine mögliche Ausführungsvariante eines Werkstückträgers 18 gezeigt, in dem ein Ausstoßer 64, wie er beispielsweise im Arbeitsbereich 16 nach Fig.1 vorgesehen sein kann, angeordnet ist und dem ein Abstützstempel 65 zugeordnet ist. Der Abstützstempel 65 ist zwischen den Höhenführungsbahnen 6 in einer Öffnung 66 der Tischplatte 39 im Arbeitsbereich 13 angeordnet und mit einer Antriebsvorrichtung 67 verbunden. Dieser Abstützstempel 65 und die Antriebsvorrichtung 67 bilden eine Stützvorrichtung 68, über die der Mobilwerkzeugteil 22 bzw. der Werkstückträger 18 unabhängig oder zusätzlich zu den Höhenführungsbahnen 6 abgestützt werden kann. Dadurch kann ein Teil oder die gesamte Schließkraft unter Umgehung der Führungsrollen 40 direkt in das Fundament bzw. Tischgestell abgeleitet werden. Eine Überbeanspruchung der Führungsrollen 40 und des Tischgestelles kann dadurch verhindert werden. Der Ausstoßer 64 wird über einen Betätigungsbolzen 69 durch eine Feder 70, beispielsweise wie dargestellt durch eine Spiralfeder, in der in vollen Linien gezeichnete Ruhestellung gehalten. Nachdem der Werkstückträger 18 mit dem Mobilwerkzeugteil 22 durch das Zusammenwirken des Anschlages 61, der über einen Antrieb 71 quer zur Vorschubrichtung 25 verschwenkbar ist, mit einem am Mobilwerkzeugteil 22 angeordneten Anschlagteil 72 positioniert ist, kann der Abstützstempel 65 über die Antriebsvorrichtung 67 aus der in vollen Linien gezeichneten Stellung in die mit strichlierten Linien gezeichneten Stellung verstellt werden. Dadurch werden die Führungsrollen 40 entlastet, zum Beispiel um 0,1 bis 0,5 mm, wie stark übertrieben mit strichlierten Linien gezeigt, angehoben und der Basiswerkzeugteil 26 stützt sich dann auf der Stützvorrichtung 68 ab. In dieser angehobenen Stellung kann dann das Einspritzen des Kunststoffes 73 erfolgen. Nach dem Zurückziehen des Abstützstempels 65 mit der Antriebsvorrichtung 67 in die in vollen Linien gezeichnete Stellung wird der Werkstückträger 18 freigegeben und kann zum nächsten Arbeitsbereich bewegt werden.

Wie in dieser Darstellung weiters gezeigt, können im Mobilwerkzeugteil 22 Bohrungen 74 angeordnet sein, die über Einlässe 75 und Auslässe 76 mit Kupplungsteilen 77 eines Basiswerkzeugteiles 26 verbunden werden können. Dadurch ist es möglich, durch diese Bohrungen 74 Kühlmittel oder Heizmittel, zumindest währenddem der Basiswerkzeugteil 26 mit dem Mobilwerkzeugteil 22 verbunden ist, hindurchzuleiten, sodaß das Formnest 46 in einem gewünschten Ausmaß temperiert werden kann. Unmittelbar vor dem Öffnen des aus dem Mobilwerkzeugteil 22 und dem Basiswerkzeugteil 26 bestehenden Werkzeuges 78 bzw. der Form kann durch Hindurchblasen von Luft das Heiz- bzw. Kühlmedium entfernt werden. Gleichermaßen ist es beispielsweise möglich, über Kontakte 79, die beim Aufsetzen des Basiswerkzeugteiles 26 auf den Mobilwerkzeugteil 22 geschlossen werden, Heizstäbe 80 mit elektrischer Energie zu versorgen, um die Temperierung des Mobilwerkzeugteiles im gewünschten Ausmaß sicherzustellen. Selbstverständlich ist es auch möglich, diese Kontakte 79 im Bereich der Seitenflächen des Werkstückträgers oder auf dessen Unterseite anzuordnen, sodaß in den verschiedenen Arbeitsbereichen eine ständige Beheizung der Form möglich ist, sodaß das Formnest 46 immer in etwa die gewünschte Temperatur aufweist. Gleichermaßen ist es möglich, die Bohrungen 74 über einen längeren Bereich der Transporteinrichtung mit Kühlmitteln konstant zu versorgen, sodaß die Abkühlung des Formteiles 2 im gewünschten Ausmaß gesteuert werden kann.

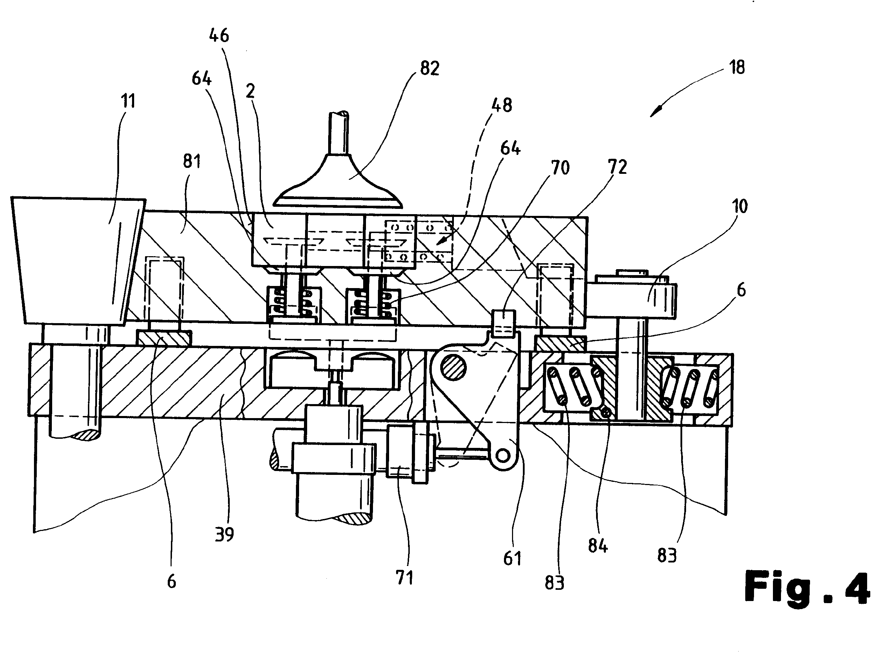

In Fig.4 ist eine andere Ausführungsvariante eines Werkstückträgers 18 gezeigt. In diesem Fall ist der Werkstückträger 18 direkt durch einen Mobilwerkzeugteil 81 gebildet. Dieser ist, wie anhand der Fig.1 und 2 bereits erläutert, zwischen Führungsrollen 10 und Anpreßrollen 11 der Seite nach und über Höhenführungsbahnen 6 der Höhe nach spielfrei geführt. In einem Formnest 46 ist ein Formteil 2 angeordnet. Während des Einspritzens des Kunststoffes in das Formnest 46 ist ein Kern 48 in das Formnest 46 eingefahren und wird nach dem Öffnen des Werkzeuges in die in strichlierten Linien gezeichnete Stellung zurückgezogen. Zum Auswerfen des Formteiles 2 aus dem Formnest 46 sind Ausstoßer 64 vorgesehen, die über Federn 70 in ihrer in vollen Linien gezeichneten Stellung gehalten werden. Über einen Stempel, der über eine Antriebsvorrichtung, beispielsweise eine druckmittelbetätigbare Zylinderkolbenanordnung, senkrecht zur Tischplatte 39 nach oben verstellt werden kann, können diese Ausstoßer 64 in die mit strichlierten Linien gezeichnete Stellung verstellt werden und pressen den Formteil, der bereits durch einen Vakuumgreifer 82 einer Handhabungsvorrichtung erfaßt ist, aus dem Formnest 46 hinaus. Wie aus dieser Darstellung ersichtlich, ist nach dem Einfahren des Stempels in die in vollen Linien gezeichnete Ruhestellung der Transportquerschnitt des Werkstückträgers 18 frei. Die Ausbildung des Auswerfers 64 entspricht dabei der Darstellung in Fig.3.

Weiters ist aus dieser Darstellung ersichtlich, daß der Anschlag 61 mit dem Antrieb 71 um eine parallel zur Vorschubrichtung 25 verlaufende Achse aus der in vollen Linien gezeichneten mit dem Anschlagteil 72 zusammenwirkenden Anschlagstellung in die in strichlierten Linien angedeutete Ruhestellung verstellbar ist. In dieser sind der Anschlag 61 und der Anschlagteil 72 außer Eingriff.

Weiters,ist in dieser Darstellung schematisch angedeutet, daß die Führungsrolle 10 über Federn 83 nach beiden Seiten schwimmend in der Tischplatte 39 gelagert ist. Diese Federn 83 weisen eine sehr hohe Federkraft auf, sodaß zu deren Verstellung eine gegenüber der im normalen Betrieb durch die Anpreßrollen 11 ausgeübten Anpreßkraft wesentlich höhere Verstellkraft erfordern, um die Lage der Führungsrollen 10 in ihrer Lage gegenüber der Tischplatte 39 zu verändern. Eine derartige Kraft tritt beispielsweise dann auf, wenn der Basiswerkzeugteil 26 mit dem Mobilwerkzeugteil 22 gekuppelt wird, da zum Zusammenpressen der Werkzeugteile eine sehr hohe Schließkraft notwendig ist. Ist nun durch eine nicht 100% exakte Positionierung des Mobilwerkzeugteiles 81 gegenüber dem Basiswerkzeugteil 26 eine Anpassung der Lage des Mobilwerkzeugteiles 81 notwendig, so kann durch die beim Schließen aufgebrachte große Schließkraft die Lage der Federn 83 entsprechend verändert werden, sodaß der Mobilwerkzeugteil 81 seine Stellung gegenüber dem Basiswerkzeugteil 26 in engen Grenzen anpassen kann.

Bei Anlagen mit einer äußerst hohen Genauigkeit für die Führung der Werkzeugteile ist es auch möglich, beispielsweise beim Einlaufen des Werkstückträgers 18 in den Arbeitsbereich die Position der Führungsrolle 10 durch eine Federarretiervorrichtung, die durch einen Arretierstift 84 gebildet sein kann, die Federwirkung der Federn 83 auszuschalten. Ist der Mobilwerkzeugteil 81 bzw. der Werkstückträger 18 im Arbeitsbereich positioniert, kann die durch den Arretierstift 84 bewirkte Arretierung der Führungsrolle 10 aufgehoben werden, sodaß sich beim Schließen des Werkzeuges, d.h. dem Aufsetzen des Basiswerkzeugteiles auf den Mobilwerkzeugteil 81, letztgenannter in engen Grenzen bewegen kann.

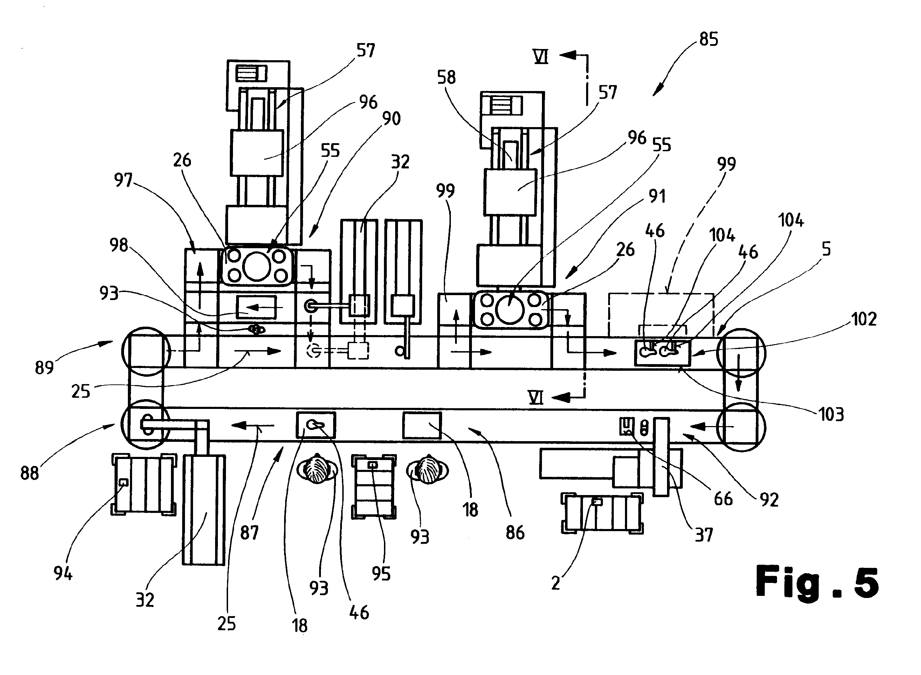

In Fig.5 ist eine andere Ausführungsform einer Anlage 85 zum Herstellen von Formteilen aus Kunststoff gezeigt. Diese Anlage 85 umfaßt eine Transporteinrichtung 5, die in Rechteckform angeordnet ist. Entlang der Transporteinrichtung 5 sind mehrere Arbeitsbereiche 86 bis 92 angeordnet. Bei den Arbeitsbereichen 86 und 87 handelt es sich um Handarbeitsplätze, in welchen die Manipulation der Teile bzw. die Behandlung der Werkstückträger 18 oder der Formnester 46 durch Arbeitskräfte 93 erfolgt. Im Arbeitsbereich 88 wird beispielsweise mit einer Montagevorrichtung 32 ein zu spritzender bzw. in den Kunststoffteil einzuspritzender Teil 94 automatisch zugeführt und in das Formnest 46 eingelegt. Dies kann zusätzlich zu den von den Arbeitskräften 93 eingelegten Teilen 95 erfolgen, oder es wird nur im Bereich der Montagevorrichtung 32 ein Teil 94 eingelegt.

Die derart vorbereiteten Werkstückträger 18 werden im Arbeitsbereich 89, beispielsweise mit einem Haftvermittler oder mit einem Trennmittel, besprüht und mit der Transporteinrichtung 5 zu den Arbeitsbereichen 90 bzw. 91 verbracht. In diesen Arbeitsbereichen 90 bzw. 91 sind Spritzgußmaschinen 96 für Kunststoffe oder Metalle angeordnet. Während der Spritzgußmaschine 96 eine eigene Transporteinrichtung 97, beispielsweise auch mit eigenen Werkstückträgern 98, zugeordnet ist, ist im Bereich der Spritzgußmaschine 96 eine zusätzliche Transportbahn 99 für die Werkstückträger 18 vorgesehen, die parallel zur Transporteinrichtung 5 verläuft. Zum Umsetzen der Werkstückträger in die Transportbahn 99 dienen Umlenkmodule 4, wie sie beispielsweise in Fig.1 gezeigt sind, oder Überschiebemodule, wie sie aus dem Stand der Technik bekannt sind. Im Bereich der Transporteinrichtung 97 können die Werkstückträger 98 völlig unabhängig von den Werkstückträgern 18 der Transporteinrichtung 5 im Umlauf bewegt werden, wobei auch diese Werkstückträger 98 einen Mobilwerkzeugteil aufweisen oder durch diesen gebildet sind. Die Werkstückträger 18 können aber auch, wie mit strichlierten Pfeilen angedeutet, in die Transportbahn 97,99 durch Drehteller abgeleitet und nach dem Passieren der Spritzgußmaschine 96 wieder der Transporteinrichtung 5 zugeführt werden. Nach dem Füllen des Formnestes mit Kunststoff wird der Formteil 2 jedoch im Bereich einer Montagevorrichtung 32, die durch ein Handlingaggregat gebildet sein kann, auf einen Werkstückträger 18 umgesetzt. Es ist aber beispielsweise auch möglich, im Arbeitsbereich 89 vorbereitete Mobilwerkzeugteile von den Werkstückträgern 18 auf die Werkstückträger 98 umzusetzen. Anstelle der Montagevorrichtung 32 kann zwischen der Transporteinrichtung 97 und der Transporteinrichtung 5 auch eine Arbeitskraft 93 zum Umsetzen der Formteile oder der Mobilwerkzeugteile 22,81 vorgesehen werden. Der Ablauf der Herstellung des Formteiles 2 im Bereich der Spritzgußmaschine 96 ist aber im Prinzip gleich zu dem, wie anhand der Fig.1 bis 4 beschrieben wurde.

Demgegenüber ist die Anordnung in Verbindung mit der Spritzgußmaschine 96 im Arbeitsbereich 91 derart getroffen, daß die Werkstückträger 18 mit ihren Formnestern 46 aus der Transporteinrichtung 5 auf die Transportbahn 99 ausgeschleust und dort dem Basiswerkzeugteil 26 zugeführt und unter diesem positioniert wird. Bei beiden Spritzgußmaschinen 96 ist die Verstellvorrichtung 55 für den Basiswerkzeugteil 26 und die Führungsanordnung 57 für die Abgabevorrichtung 27 bzw. das Mundstück 59 gezeigt. Ist im Arbeitsbereich 91 ein Formnest 46 mit Kunststoff gefüllt, wird der Werkstückträger 18 mit dem Mobilwerkzeugteil 22,81 wieder der Transporteinrichtung 5 zugeführt. Im Arbeitsbereich 92 kann dann ein Antrieb für einen Ausstoßer 64 in der Öffnung 66 der Tischplatte 39 und eine Entnahmevorrichtung 37 vorgesehen sein, mit welcher die Formteile 2 aus dem Formnest 46 des Werkstückträgers 18 entnommen werden. In einer Öffnung 66 ist weiters ein Anschlag 61 zum Positionieren der Werkstückträger 18 über dem Antrieb für den Ausstoßer 64 angeordnet.

Gleichzeitig kann in diesem Bereich eine Reinigung des Formnestes 46 sowie das Einbringen von Trennmittel erfolgen. Selbstverständlich ist es aber auch möglich, daß die Entnahme der Formteile 2 und auch die Reinigung der Formnester 46 durch Arbeitskräfte 93 erfolgt, während die gesundheitsschädliche und schmutzige Arbeit des Einbringens des Trennmittels in einem nachfolgenden Arbeitsbereich maschinell erfolgt.

Aus der Beschreibung der Anlage 1 und der Anlage 85 in Fig.1 bzw. in Fig.5 und den darin geschilderten Varianten der im Zuge der Transporteinrichtungen angeordneten Arbeitsbereiche ist ersichtlich, daß in Verbindung mit derartigen Transporteinrichtungen 5 bzw. 97 die Abgabevorrichtungen 27 bzw. Spritzgußmaschinen 96 für die Massenproduktion von Teilen in technischer und organisatorischer Hinsicht wesentlich besser ausgenutzt und eingesetzt werden können. Vor allem ist es dadurch möglich, die Schußzeiten derartiger Maschinen zu verkürzen und die damit im Zusammenhang stehenden Arbeitsvorgänge, wie Einlegen von Teilen, Reinigen der Formen, Einbringen von Trennmittel und dgl., in Verbindung mit der Beschickung der Spritzgußmaschinen 96 zu automatisieren bzw. im Zuge einer losen Verkettung Handarbeitsplätze zu integrieren.

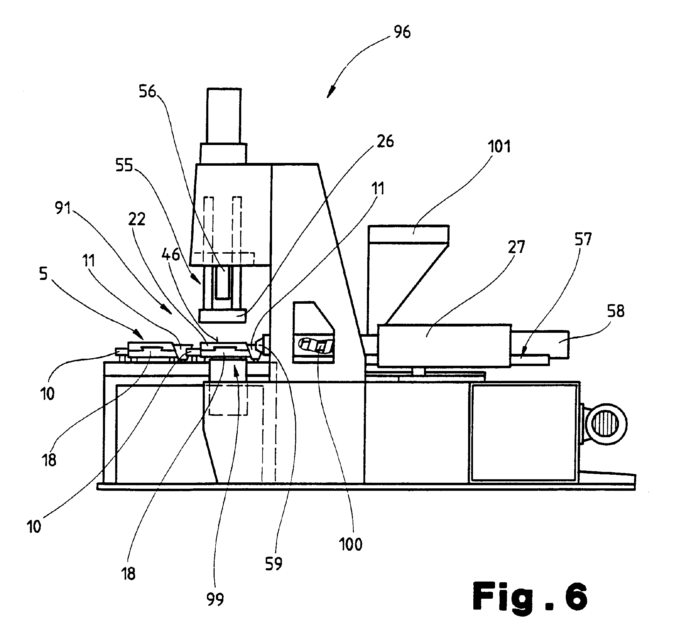

In Fig.6 ist eine Spritzgußmaschine 96 im Arbeitsbereich 91 gezeigt. Aus dieser Darstellung sind die beiden parallel zueinander verlaufenden Führungsbahnen der Transporteinrichtung 5 und der Transportbahn 99 ersichtlich. Durch die Anordnung mehrerer, hintereinander liegender Transportbahnen 99, die parallel zur Transporteinrichtung 5 vorgesehen werden können - wie dies schematisch in Fig.5 durch strichlierte Linien angedeutet ist - können parallel zueinander mehrere Spritzgußmaschinen 96 von der selben Transporteinrichtung 5 mit Mobilwerkzeugteilen versehen werden. Es ist nämlich möglich, daß während des Aufenthaltes eines Werkstückträgers 18 im Bereich der Spritzgußmaschine 96 in der Transportbahn 99 ein anderer Werkstückträger 18 auf der Transporteinrichtung 5 die besetzte Spritzgußmaschine 96 passieren und der nachfolgenden Spritzgußmaschine 96 zugeführt werden kann. Gleichermaßen ist der Abtransport von mit Formteilen versehenen Mobilwerkzeugteilen ungestört von der Funktion der hintereinander geschalteten Spritzgußmaschinen 96 möglich. Es ist ersichtlich, daß die Werkstückträger 18 sowohl in der Transportbahn 99 als auch in der Transporteinrichtung 5 mittels der anhand der vorstehenden Figuren bereits beschriebenen Führungsrollen 10 und Anpreßrollen 11 geführt und vorwärtsbewegt werden. Die Vorwärtsbewegung kann aber auch durch, von den Führungs- und Anpreßrollen 10,11 unabhängigen Antrieben, wie Ketten, Reibbänder oder dgl., erfolgen. Die mit dem Mundstück 59 versehene Abgabevorrichtung 27 ist entlang von Führungssäulen einer Führungsanordnung 57 mittels eines Antriebes 58 verstellbar, wobei diese Verstellung senkrecht zur Vorschubrichtung 25 im Bereich der Abgabevorrichtung 27, jedoch in der gleichen Ebene wie die Transportebene, erfolgt. Über die Verstellvorrichtung 55, die ebenfalls aus Führungssäulen und einem Verstellantrieb 56 gebildet ist, kann der Basiswerkzeugteil 26 gegenüber dem am Werkstückträger 18 angeordneten Mobilwerkzeugteil 22 senkrecht zur Transportebene der Transporteinrichtung 5 bzw. der Transportbahn 99 verstellt werden. Durch diese Aufteilung der Bewegungen des Mundstückes 59 sowie des Basiswerkzeugteiles 26 und des Mobilwerkzeugteiles 22 in zueinander senkrechten Richtungen können die Teile gleichzeitig aufeinander zubewegt werden, wobei trotzdem Kollisionen der einzelnen Teile untereinander und deren Beschädigung verhindert ist. In der Abgabevorrichtung 27 kann, wie schematisch angedeutet, eine Schnecke 100 angeordnet sein, mit der beispielsweise ein Kunststoffgranulat, welches in einem Silo 101 enthalten ist, plastifiziert wird, um durch Betätigung der Schnecke 100 über das Mundstück 59 dem Formnest 46 zugeführt zu werden.

Selbstverständlich ist es möglich, anstelle der beschriebenen Spritzgußmaschinen 96 für Kunststoff auch Spritzgußmaschinen für Metalle, beispielsweise Druckgußmaschinen für Aluminium und dgl., in entsprechender Art zu verketten und es ist darüber hinaus möglich, auch Maschinen, die eine Formänderung von Teilen durch Preßvorgänge oder dgl. bei gleichzeitiger Temperatureinwirkung oder durch Tiefziehen ermöglichen, in ähnlicher Weise über eine Transporteinrichtung in erfindungsgemäßer Art zu verketten.

Wie weiters beispielsweise auf einem Werkstückträger 102 in Fig.5 gezeigt, kann ein Mobilwerkzeugteil 103 mit mehreren, hintereinander angeordneten Formnestern 46 ausgestattet sein, die jeweils mit einem eigenen Angußkanal 104 verbunden sind. Über die Angußkanäle 104 können diese Formnester 46 aufeinanderfolgend mit der Abgabevorrichtung 27 bzw. dem Mundstück 59 der Spritzgußmaschinen 96 verbunden werden. Es ist jedoch auch möglich, Gruppen von Formnestern 46 gleichzeitig mit einer einzigen Abgabevorrichtung 27 zu verbinden. Dazu kommt, daß diese auf einem Werkstückträger 102 angeordneten Formnester 46 gleichzeitig oder in Gruppen aufeinanderfolgend mit einem Basiswerkzeugteil 26 verbunden werden können. Der Vorteil dieser Anordnung liegt vor allem darin, daß bei fertigungsbedingten oder materialbedingten längeren Standzeiten der Formteile 2 in den Formnestern 46 dieser Zeitnachteil dadurch verringert werden kann, daß aufeinanderfolgend mehrere Formnester 46 mit Kunststoff gefüllt werden, sodaß sich die beim letzten Formteil abzuwartende Zeitspanne vor dem Öffnen bzw. voneinander Entfernen des Mobilwerkzeugteiles 103 vom Basiswerkzeugteil 26 auf die gesamte Fertigungsdauer, der in einem Mobilwerkzeugteil 103 angeordneten Formnester 46 aufteilt.

Wie weiters in Fig.1 schematisch angedeutet, ist es möglich, daß der Basiswerkzeugteil 26 bzw. die Abgabevorrichtung 27 auf einer Nachführvorrichtung 105, die durch Führungsbahnen 106 und einem Nachführantrieb 107 gebildet ist, angeordnet ist. Dadurch, daß die Abgabevorrichtung 27 und der Basiswerkzeugteil 26 auf der Nachführvorrichtung 107 parallel zur Vorschubrichtung 25 mit dem Nachführantrieb 107 verfahrbar sind, ist es möglich, daß sich der Werkstückträger bzw. der Mobilwerkzeugteil 22 und der Basiswerkzeugteil 26 gleichförmig entlang der Transporteinrichtung 5 bzw. der Höhenführungsbahnen 6 bewegt, während Kunststoff in das Formnest eingespritzt wird. Dadurch können die Zeiten zum Anhalten der Werkstückträger 18 sowie zum Anfahren und Beschleunigen eingespart werden, wodurch die Taktzeit zusätzlich erhöht werden kann.

## Bezugszeichenaufstellung

| | | | |
|---|---|---|---|
| 1 | Anlage | 41 | Stützleiste |
| 2 | Formteil | 42 | Seitenflanke |
| 3 | Tischmodul | 43 | Förderkette |
| 4 | Umlenkmodul | 44 | Zentriervorrichtung |
| 5 | Transporteinrichtung | 45 | Arretiervorrichtung |
| 6 | Höhenführungsbahn | 46 | Formnest |
| 7 | Seitenführungsbahn | 47 | Kern |
| 8 | Seitenführungsbahn | 48 | Kern |
| 9 | Achse | 49 | Mitnehmer |
| 10 | Führungsrolle | 50 | Zentriervorrichtung |
| 11 | Anpreßrolle | 51 | Arretiervorrichtung |
| 12 | Antriebssystem | 52 | Aufnahmeöffnung |
| 13 | Arbeitsbereich | 53 | Riegel |
| 14 | Arbeitsbereich | 54 | Antrieb |
| 15 | Arbeitsbereich | 55 | Verstellvorrichtung |
| 16 | Arbeitsbereich | 56 | Verstellantrieb |
| 17 | Arbeitsbereich | 57 | Führungsanordnung |
| 18 | Werkstückträger | 58 | Zustellantrieb |
| 19 | Positioniervorrichtung | 59 | Mundstück |
| 20 | Reinigungsvorrichtung | 60 | Angußöffnung |
| 21 | Formnest | 61 | Anschlag |
| 22 | Mobilwerkzeugteil | 62 | Zentrierstift |
| 23 | Speicherbehälter | 63 | Zentrierbohrung |
| 24 | Vorratsbehälter | 64 | Ausstoßer |
| 25 | Vorschubrichtung | 65 | Abstützstempel |
| 26 | Basiswerkzeugteil | 66 | Öffnung |
| 27 | Abgabevorrichtung | 67 | Antriebsvorrichtung |
| 28 | Verstellvorrichtung | 68 | Stützvorrichtung |
| 29 | Führungssäule | 69 | Betätigungsbolzen |
| 30 | Tank | 70 | Feder |
| 31 | Tank | 71 | Antrieb |
| 32 | Montagevorrichtung | 72 | Anschlagteil |
| 33 | Zuführvorrichtung | 73 | Kunststoff |
| 34 | Speicher | 74 | Bohrung |
| 35 | Einzelteil | 75 | Einlaß |
| 36 | Bearbeitungsvorrichtung | 76 | Auslaß |
| 37 | Entnahmevorrichtung | 77 | Kupplungsteil |
| 38 | Palette | 78 | Werkzeug |
| 39 | Tischplatte | 79 | Kontakt |
| 40 | Führungsrolle | 80 | Heizstab |

| 81 | Mobilwerkzeugteil | 96 | Spritzgußmaschine |
|----|---|----|---|
| 82 | Vakuumgreifer | 97 | Transporteinrichtung |
| 83 | Feder | 98 | Werkstückträger |
| 84 | Arretierstift | 99 | Transportbahn |
| 85 | Anlage | 100 | Schnecke |
| | | | |
| 86 | Arbeitsbereich | 101 | Silo |
| 87 | Arbeitsbereich | 102 | Werkstückträger |
| 88 | Arbeitsbereich | 103 | Mobilwerkzeugteil |
| 89 | Arbeitsbereich | 104 | Angußkanal |
| 90 | Arbeitsbereich | 105 | Nachführvorrichtung |
| | | | |
| 91 | Arbeitsbereich | 106 | Führungsbahn |
| 92 | Arbeitsbereich | 107 | Nachführantrieb |
| 93 | Arbeitskraft | | |
| 94 | Teil | | |
| 95 | Teil | | |

## Patentansprüche

1. Verfahren zur Herstellung von Formteilen (2) aus Kunststoff, bei welchem der Kunststoff mit einer Abgabevorrichtung in ein Formnest (21) eines aus einem Basiswerkzeugteil (26) und mehreren Mobilwerkzeugteilen (22,81) bestehenden Werkzeuges eingebracht wird und im Formnest (21) bis zum Erreichen einer ausreichenden Formhaltigkeit gehalten wird, worauf der Formteil (2) ausgestoßen wird, dadurch gekennzeichnet, daß die Mobilwerkzeugteile (22,81) unabhängig voneinander entlang einer Seiten- und bzw. oder Höhenführungsbahn (6 bis 8) einer Transporteinrichtung (5,97) verfahrbar und aufeinanderfolgend in den Arbeitsbereich (13,91) des Basiswerkzeugteiles (26) verbracht und zumindest in diesem mit einem Kühl- und bzw. oder Heizkreislauf verbunden werden und die Werkzeugteile zu einem geschlossenen Formnest zusammengefügt werden, worauf der Kunststoff (73) in das Formnest (46) eingebracht wird, und daß nach Ablauf einer Reaktionszeit der Basiswerkzeugteil (26) und der Mobilwerkzeugteil (22,81) voneinander getrennt und der Mobilwerkzeugteil (22,81) mit dem Formteil (2) unabhängig von den anderen Mobilwerkzeugteilen (22,81) einer weiteren Behandlung und ein nachfolgender Mobilwerkzeugteil (22,81) mit leerem Formnest (46) mit dem Basiswerkzeugteil (26) verbunden und dem leeren Formnest (46) Kunststoff (73) zugeführt wird.

2. Verfahren zur Herstellung von Formteilen aus Kunststoff nach Anspruch 1, dadurch gekennzeichnet, daß der Basiswerkzeugteil (26) senkrecht zu der Seiten- und bzw. oder Höhenführungsbahn (6 bis 8) verstellbar ist, wobei vorzugsweise ein Teil der Schließkraft über die Transporteinrichtung (5,97) in ein Fundament abgeleitet wird.

3. Verfahren zur Herstellung von Formteilen aus Kunststoff nach Anspruch 1 oder 2, dadurch gekennzeichnet, daß die Abgabevorrichtung (27) während oder nach dem Kuppeln des Basiswerkzeugteiles (26) mit dem Mobilwerkzeugteil (22,81), mit dem Formnest (46) oder einem Anguß für das Formnest (46) gekuppelt wird.

4. Verfahren zur Herstellung von Formteilen aus Kunststoff nach einem oder mehreren der Ansprüche 1 bis 3, dadurch gekennzeichnet, daß die Abgabevorrichtung (27) senkrecht zum Basiswerkzeugteil (26) und bzw. oder der Transporteinrichtung (5,97) verstellt wird.

5. Verfahren zur Herstellung von Formteilen aus Kunststoff nach einem oder mehreren der Ansprüche 1 bis 4, dadurch gekennzeichnet, daß die Mobilwerkzeugteile (22,81) spielfrei geführt sind und in einer mit dem Basiswerkzeugteil (26) fluchtenden Stellung angehalten bzw. positioniert werden, worauf der Basiswerkzeugteil (26) gegen den Mobilwerkzeugteil (22,81) gepreßt und dabei gegebenenfalls der Mobilwerkzeugteil (22,81) und der Basiswerkzeugteil (26) gegeneinander zentriert werden und daß nach der Herstellung des Formteils (2) der Basiswerkzeugteil (26) vom Mobilwerkzeugteil (22,81) abgehoben und der Mobilwerkzeugteil (22,81) zum nächsten Arbeitsbereich (14 bis 17;86 bis 89;92) transportiert wird.

6. Verfahren zur Herstellung von Formteilen aus Kunststoff nach einem oder mehreren der Ansprüche 1 bis 5, dadurch gekennzeichnet, daß in einem vom Basiswerkzeugteil (26) distanzierten Arbeitsbereich (16,92) der Formteil (2) aus dem Formnest (46) im Mobilwerkzeugteil (22,81) ausgestoßen wird.

7. Verfahren zur Herstellung von Formteilen aus Kunststoff nach einem oder mehreren der Ansprüche 1 bis 6, dadurch gekennzeichnet, daß auf einem Werkstückträger (102) mehrere Mobilwerkzeugteile (22,81) oder Formnester (46) angeordnet sind, die insbesondere gleichzeitig mit dem Basiswerkzeugteil (26) verbunden und vorzugsweise aufeinanderfolgend mit der Abgabevorrichtung verbunden werden.

8. Verfahren zur Herstellung von Formteilen aus Kunststoff nach einem oder mehreren der Ansprüche 1 bis 7, dadurch gekennzeichnet, daß die im Formnest (46) des Mobilwerkzeugteiles (103) gehaltenen Formteile (2) bearbeitet und bzw. oder mit weiteren Teilen (94,95) verbunden bzw. zusammenmontiert werden.

9. Verfahren zur Herstellung von Formteilen aus Kunststoff nach einem oder mehreren der Ansprüche 1 bis 8, dadurch gekennzeichnet, daß der Formteil (2) insbesondere nach der Montage von weiteren Teilen (94,95) aus dem Formnest (46) des Mobilwerkzeugteiles (22,81) entfernt wird und danach das Formnest (46) gereinigt und mit Trennmittel beschichtet wird.

10. Verfahren zur Herstellung von Formteilen aus Kunststoff nach einem oder mehreren der Ansprüche 1 bis 9, dadurch gekennzeichnet, daß nach dem Reinigen des Formnestes (46) im Mobilwerkzeugteil (22,81,103) bevorzugt automatisch ein Teil (94,95) positioniert wird, worauf der Mobilwerkzeugteil (22) dem Basiswerkzeugteil (26) zugeführt wird.

11. Verfahren zur Herstellung von Formteilen aus Kunststoff nach einem oder mehreren der Ansprüche 1 bis 10, dadurch gekennzeichnet, daß nach der Herstellung des Formteiles (2) der Mobilwerkzeugteil (22,81,103) einem Arbeitsbereich (86,87) zugeführt wird, in dem der Formteil (2) manuell entnommen wird.

12. Verfahren zur Herstellung von Formteilen aus Kunststoff nach einem oder mehreren der Ansprüche 1 bis 11, dadurch gekennzeichnet, daß nach der Herstellung des Formteiles (2) dieser mit dem Mobilwerkzeugteil (22,81,103) einem Arbeitsbereich zugeführt wird, in dem der Formteil einer Temperaturbehandlung unterzogen wird.

13. Anlage zur Herstellung von Formteilen aus Kunststoff mit einer Abgabevorrichtung für den Kunststoff und einem mehrteiligen Werkzeug mit einem Basiswerkzeugteil und einem Mobilwerkzeugteil und einer diesen zugeordneten Ausstoßvorrichtung für die Formteile zur Durchführung des Verfahrens nach einem der Ansprüche 1 bis 13, dadurch gekennzeichnet, daß mehrere gleichartige Mobilwerkzeugteile (22,81,103) auf voneinander distanzierten, unabhängig voneinander verfahrbaren Werkstückträgern (18,102) einer Transporteinrichtung (5,97) angeordnet und mit einem Heiz- und bzw. oder Kühlkreislauf versehen sind, und daß dem Werkstückträger (18,102) in einem, dem Basiswerkzeugteil (26) zugeordneten Arbeitsbereich (13,90,91) eine Positioniervorrichtung (19) zugeordnet ist und daß der Mobilwerkzeugteil (22,81,103) und der Basiswerkzeugteil (26) über eine Verstellvorrichtung (55) relativ zueinander verstellbar gelagert sind.

14. Anlage nach Anspruch 13, dadurch gekennzeichnet, daß zwischen dem Basiswerkzeugteil (26) und dem Mobilwerkzeugteil (22,81,103) eine Zentrier- und bzw. oder Arretiervorrichtung (44,45) angeordnet ist.

15. Anlage nach Anspruch 13 oder 14, dadurch gekennzeichnet, daß die Ausstoßer (64) in dem mit dem Werkstückträger (18,102) verbundenen Mobilwerkzeugteil (22,81,103) angeordnet sind.

16. Anlage nach einem oder mehreren der Ansprüche 13 bis 15, dadurch gekennzeichnet, daß der Mobilwerkzeugteil (22,81,103) den Werkstückträger (18,102) bildet.

17. Anlage nach einem oder mehreren der Ansprüche 1 3 bis 16, dadurch gekennzeichnet, daß die Abgabevorrichtung (27) in einer Führungsanordnung (57) mit einem Zustellantrieb (58) verstellbar gelagert ist.

18. Anlage nach einem oder mehreren der Ansprüche 13 bis 17, dadurch gekennzeichnet, daß eine Verstellrichtung der Verstellvorrichtung (55), eine Zustellrichtung der Führungsanordnung (57) und eine Vorschubrichtung der Werkstückträger (18,102) der Transporteinrichtung (5,97) winkelig, insbesondere senkrecht zueinander verlaufen.

**19.** Anlage nach einem oder mehreren der Ansprüche 13 bis 18, dadurch gekennzeichnet, daß die Transporteinrichtung (5,97) Seiten- und Höhenführungsbahnen (6 bis 8) und ein Antriebssystem für die Werkstückträger (18,102) aufweist.

**20.** Anlage nach einem oder mehreren der Ansprüche 13 bis 19, dadurch gekennzeichnet, daß entlang der Transporteinrichtung (5,97) mehrere Arbeitsbereiche (13 bis 17;87 bis 92) in Vorschubrichtung (25) distanziert voneinander angeordnet sind.

**21.** Anlage nach einem oder mehreren der Ansprüche 13 bis 20, dadurch gekennzeichnet, daß in einem Arbeitsbereich (13) eine Antriebsvorrichtung (67) einer Ausstoßvorrichtung für die im Mobilwerkzeugteil (22,81,103) angeordneten Ausstoßer (64) vorgesehen ist.

**22.** Anlage nach einem oder mehreren der Ansprüche 13 bis 21, dadurch gekennzeichnet, daß in einem Arbeitsbereich (14,88) eine Montagevorrichtung (32) zum Fügen und bzw. oder Verbinden eines weiteren Einzeilteiles (35) mit dem Formteil (2) angeordnet ist.

**23.** Anlage nach einem oder mehreren der Ansprüche 13 bis 22, dadurch gekennzeichnet, daß in einem Arbeitsbereich (15) eine Bearbeitungsvorrichtung (36) für den in einem Formnest (46) enthaltenen Formteil (2) angeordnet ist.

**24.** Anlage nach einem oder mehreren der Ansprüche 13 bis 23, dadurch gekennzeichnet, daß in einem Arbeitsbereich (17) eine Reinigungsvorrichtung (20) für das Formnest (46) im Mobilwerkzeugteil (22,81,103) angeordnet ist.

**25.** Anlage nach einem oder mehreren der Ansprüche 13 bis 24, dadurch gekennzeichnet, daß das Formnest (46) als Montageaufnahme ausgebildet ist.

**26.** Anlage nach einem oder mehreren der Ansprüche 13 bis 25, dadurch gekennzeichnet, daß der Basiswerkzeugteil (26) mit einer parallel zur Vorschubrichtung (25) der Transporteinrichtung (5,97) verlaufenden Nachführvorrichtung verbunden ist.

**27.** Anlage nach einem oder mehreren der Ansprüche 13 bis 26, dadurch gekennzeichnet, daß in einem Mobilwerkzeugteil (22,81,103) auf einem Werkstückträger (18) mehrere Formnester (46) in Vorschubrichtung (25) der Transporteinrichtung (5,97) hintereinander angeordnet sind.

**28.** Anlage nach einem oder mehreren der Ansprüche 13 bis 27, dadurch gekennzeichnet, daß im Formnest (46) des Mobilwerkzeugteiles (22,81,103) entnehmbare und bzw. oder gegenüber diesem verstellbare Einlageteile und bzw. oder Kerne (47,48) angeordnet sind.

## Claims

1. A process for manufacturing mouldings (2) of plastics material, in which the plastics material is introduced by a dispensing device into a mould cavity (21) of a tool comprising a basic part (26) and several mobile parts (22, 81), and is held in the mould cavity (21) until adequate stability of shape is attained, whereupon the moulding (2) is ejected, characterised in that the mobile tool parts (22, 81) are movable independently of each other along a lateral and/or vertical guideway (6 to 8) of a conveyor (5, 97) and are brought in succession into the working region (13, 91) of the basic part (26) of the tool and at least therein are connected with a cooling and/or heating circuit and the tool parts are joined together into a closed mould cavity, whereupon the plastics material (73) is introduced into the mould cavity (46), and that, after a reaction time has elapsed, the basic part (26) of the tool and the mobile part (22, 81) of the tool are separated from one another and the mobile part (22, 81)of the tool, together with the moulding (2), independently of the other mobile parts (22, 81) is subjected to a further treatment and a following mobile part (22, 81) of the tool with an empty mould cavity (46) is connected to the basic part (26) of the tool and plastics material (73) is fed to the empty mould cavity (46).

2. A process for manufacturing mouldings of plastics material, as claimed in claim 1, characterised in that the basic part (26) of the tool is adjustable at right angles to the lateral and/or vertical guideway (6 to 8), preferably a portion of the closing force being diverted to a base by way of the conveyor (5, 97).

3. A process for manufacturing mouldings of plastics material, as claimed in claim 1 or 2, characterised in that the dispensing device (27) is coupled to the mould cavity (46) or to a gate for the mould cavity (46) during or after coupling of the basic part (26) of the tool to the mobile part (22, 81) of the tool.

4. A process for manufacturing mouldings of plastics material, as claimed in one or several of claims 1 to 3, characterised in that the dispensing device (27) is displaced at right angles to the basic part (26) of the tool and/or the conveyor (5, 97).

5. A process for manufacturing mouldings of plastics material, as claimed in one or several of claims 1 to 4, characterised in that the mobile parts (22, 81) of the tool are guided in a play-free manner and are arrested or positioned in a position in alignment with the basic part (26) of the tool, whereupon the basic part (26) of the tool is pressed against the mobile part (22, 81) of the tool and, if necessary, the mobile part (22, 81) of the tool and the basic part (26) of the tool are centred relative to one another, and that, after the moulding (2) has been produced, the basic part (26) of the tool is raised from the mobile part (22, 81) of the tool, and the mobile part (22, 81) of the tool is conveyed to the next working region (14 to 17; 86 to 89; 92).

6. A process for manufacturing mouldings of plastics material, as claimed in one or several of claims 1 to 5, characterized in that the moulding (2) is ejected from the mould cavity (46) in the mobile part (22, 81) of the tool in a working region (16, 92) spaced from the basic part (26) of the tool.

7. A process for manufacturing mouldings of plastics material, as claimed in one or several of claims 1 to 6, characterised in that several mobile parts (22, 81) of the tool or mould cavities (46) are disposed on one workpiece carrier (102) and are connected particularly simultaneously to the basic part (26) of the tool and are connected preferably in succession to the dispensing device.

8. A process for manufacturing mouldings of plastics material, as claimed in one or several of claims 1 to 7, characterised in that the mouldings (2) held in the mould cavity (46) of the mobile part (103) of the tool are processed and/or connected to, or assembled with, further parts (94, 95).

9. A process for manufacturing mouldings of plastics material, as claimed in one or several of claims 1 to 8, characterised in that the moulding (2) is removed from the mould cavity (46) of the mobile part (22, 81) of the tool particularly after further parts (94, 95) have been assembled, and then the mould cavity (46) is cleaned and coated with parting agent.

10. A process for manufacturing mouldings of plastics material, as claimed in one or several of claims 1 to 9, characterised in that a part (94, 95) is positioned in the mobile part (22, 81, 103) of the tool preferably automatically after the mould cavity (46) has been cleaned, whereupon the mobile part (22) of the tool is conducted to the basic part (26) of the tool.

11. A process for manufacturing mouldings of plastics material, as claimed in one or several of claims 1 to 10, characterised in that, after the moulding (2) has been produced, the mobile part (22, 81, 103) of the tool is conducted to a working region (86, 87) in which the moulding (2) is removed manually.

12. A process for manufacturing mouldings of plastics material, as claimed in one or several of claims 1 to 11, characterised in that, after the moulding (2) has been produced, it is conducted together with the mobile part (22, 81, 103) of the tool to a working region in which the moulding is subjected to thermal treatment.

13. An installation for manufacturing mouldings of plastics material, having a dispensing device for the plastics material and a multipart tool having a basic part and a mobile part, and an ejector, associated with the said parts, for the mouldings, for performing the process as claimed in one of the claims 1 to 13, characterised in that several similar mobile parts (22, 81, 103) of the tool are disposed on spaced workpiece carriers (18, 102) of a conveyor (5, 97), movable independently of each other, and are provided with a heating and/or cooling circuit and that a positioning device (19) is associated with the workpiece carrier (18, 102) in a working region (13, 90, 91) associated with the basic part (26) of the tool, and that the mobile part (22, 81, 103) of the tool and the basic part (26) of the tool are mounted so as to be displaceable relative to one another by way of an adjusting device (55).

14. An installation as claimed in claim 13, characterised in that a centering and/or locking device (44, 45) is disposed between the basic part (26) of the tool and mobile part (22, 81, 103) of the tool.

15. An installation as claimed in claim 13 or 14, characterised in that the ejectors (64) are disposed in the mobile part (22, 81, 103) of the tool connected to the workpiece carrier (18, 102).

16. An installation as claimed in one or several of claims 13 to 15, characterised in that mobile part (22, 81, 103) of the tool forms the workpiece carrier (18, 102).

17. An installation as claimed in one or several of claims 13 to 16, characterised in that the dispensing device (27) is displaceably mounted in a guide arrangement (57) having a feed drive (58).

13. An installation as claimed in one or several of claims 13 to 17, characterised in that one adjusting direction of the adjusting device (55), one feed direction of the guide arrangement (57) and one feed direction of the workpiece carriers (18, 102) of the conveyor (5, 97) extend at an angle, particularly at right angles, to one another.

19. An installation as claimed in one or several of claims 13 to 18, characterised in that the conveyor (5, 97) has lateral guideways and vertical guideways (6 to 8) and a drive system for the workpiece carriers (18, 102).

20. An installation as claimed in one or several of claims 13 to 19, characterised in that several working regions (13 to 17; 87 to 92) are disposed along the conveyor (5, 97) and spaced apart in the feed direction (25).

21. An installation as claimed in one or several of claims 13 to 20, characterised in that a drive device (67) of an ejection device for the ejectors (64) disposed in the mobile part (22, 81, 103) of the tool is provided in one working region (13).

22. An installation as claimed in one or several of claims 13 to 21, characterised in that an assembly device (32) for joining and/or connecting a further component part (35) to the moulding (2) is disposed in one working region (14, 88).

23. An installation as claimed in one or several of claims 13 to 22, characterised in that a processing device (36) for the moulding (2) contained in a mould cavity (46) is disposed in one working region (15).

24. An installation as claimed in one or several of claims 13 to 23, characterised in that a cleaning device (20) for the mould cavity (46) in the mobile part (22, 81, 103) of the tool is disposed in one working region (17).

25. An installation as claimed in one or several of claims 13 to 24, characterised in that the mould cavity (46) is in the form of an assembly receptacle.

26. An installation as claimed in one or several of claims 13 to 25, characterised in that the basic part (26) of the tool is connected to a follow-up device extending parallel to the feed direction (25) of the conveyor (5, 97).

27. An installation as claimed in one or several of claim 13 to 26, characterised in that several mould cavities (46) are disposed one behind the other in the feed direction (25) of the conveyor (5, 97) in one mobile part (22, 81, 103) of the tool on a workpiece carrier (18).

28. An installation as claimed in one or several of claims 13 to 27, characterised in that insert parts and/or cores (47, 48) are disposed in the mould cavity (46) of the mobile part (22, 81, 103) of the tool and are removable or adjustable relative thereto.


## Revendications

1 - Procédé pour la fabrication de pièces moulées (2) en matière plastique, dans lequel la matière plastique est introduite par l'intermédiaire d'un dispositif de distribution dans un nid formant moule (21) d'un outil constitué par un élément d'outil de base (26) et plusieurs éléments d'outil mobiles (22,81) et est maintenu dans le nid formant moule (21) jusqu'à l'obtention d'une stabilité de forme suffisante, la suite de quoi la pièce moulée (2) est éjectée, caractérisé en ce que les éléments d'outil mobiles (22,81) peuvent être déplacés indépendamment les uns des autres le long d'une voie de guidage latérale et/ou en hauteur (6 à 8) d'un dispositif de transport (5, 97) et amenés successivement dans la zone de travail (13,91) de l'élément d'outil de base (26) et sont reliés au moins dans celui-ci à un circuit de refroidissement et/ou de chauffage,et en ce que les éléments d'outil sont réunis en une nid formant moule fermé, à la suite de quoi la matière plastique (73) est introduite dans le nid formant moule (46), et qu'après l'expiration d'un temps de réaction, l'élément d'outil de base (26) et l'élément d'outil mobile (22,81) sont séparés l'un de l'autre et que l'élément d'outil mobile (22,81) avec la pièce moulée (2), indépendamment des autres éléments d'outil mobiles (22,81) est soumis à un traitement ultérieur et qu'un élément d'outil mobile suivant (22,81) avec un nid vide formant moule (46) est relié à l'élément d'outil de base (26) et que de la matière plastique (73) est amenée dans le nid vide formant moule (46).

2 - Procédé pour la fabrication de pièces moulées en matière plastique selon la revendication 1, caractérisé en ce que l'élément d'outil de base (26) peut être déplacé perpendiculairement à la voie de guidage latérale et/ou en hauteur (6 à 8), de préférence une partie de la force de serrage étant conduite par l'intermédiaire du dispositif de transport (5,97) dans un fondement.

3 - Dispositif pour la fabrication de pièces moulées en matière plastique selon la revendication 1 ou 2, caractérisé en ce que le dispositif de distribution (27), pendant ou après l'accouplement de l'élément d'outil de base (26) avec l'élément d'outil mobile (22,81) est accouplé au nid formant moule (46) ou à un culot d'injection du nid formant moule (46).

4 - Procédé pour la fabrication de pièces moulées en matière plastique selon l'une ou plusieurs des revendications 1 à 3, caractérisé en ce que le dispositif de distribution (27) est réglé perpendiculairement à l'élément d'outil de base (26) et/ou au dispositif de transport (5,97).

EP 0 397 674 B1

5 - Procédé pour la fabrication de pièces moulées en matière plastique selon l'une ou plusieurs des revendications 1 à 4, caractérisé en ce que les éléments d'outil mobiles (22, 81) sont guidés sans jeu et sont arrêtés ou positionnés dans une position alignée avec l'élément d'outil de base (26), l'élément d'outil de base (26) étant ensuite pressé contre l'élément d'outil mobile (22,81) et, ce faisant, l'élément d'outil mobile (22,81) et l'élément d'outil de base (26) étant centré le cas échéant l'un par rapport à l'autre, et en ce qu'après la fabrication de la pièce moulée (2), l'élément d'outil de base (26) est soulevé de l'élément d'outil mobile (22,81) et l'élément d'outil mobile (22,81) est transporté à la prochaine zone de travail (14 à 17; 86 à 89;92).

6 - Procédé pour la fabrication de pièces moulées en matière plastique selon l'une ou plusieurs des revendications 1 à 5, caractérisé en ce que dans une zone de travail (16,92) à distance de l'élément d'outil de base (26), la pièce moulée (2) est éjectée du nid formant moule (46) dans l'élément d'outil mobile (22,81).

7 - Procédé pour la fabrication de pièces moulées en matière plastique selon l'une ou plusieurs des revendications 1 à 6, caractérisé en ce que sur un support d'outil (102) sont disposés plusieurs éléments d'outil mobiles (22,81) ou nids formant moule (46) qui sont reliés notamment en même temps à l'élément d'outil de base (26) et sont reliés, de préférence, de manière successive, au dispositif de distribution.

8 - Procédé pour la fabrication de pièces moulées en matière plastique selon l'une ou plusieurs des revendications 1 à 7, caractérisé en ce que les pièces moulées (2) tenues dans le nid formant moule (46) de l'élément d'outil mobile (103) sont façonnées et/ou sont reliées ou montées ensemble avec d'autres pièces (94,95).

9 - Procédé pour la fabrication de pièces moulées en matière plastique selon l'une ou plusieurs des revendications 1 à 8, caractérisé en ce que la pièce moulée (2), notamment après le montage d'autres pièces (94,95), est retirée du nid formant moule (46) de l'élément d'outil mobile (22,81), et qu'ensuite le nid formant moule (46) est nettoyé et couvert d'une couche d'agent de séparation.

10 - Procédé pour la fabrication de pièces moulées en matière plastique selon l'une ou plusieurs des revendications 1 à 9, caractérisé en ce qu'après le nettoyage du nid formant moule (46), est une pièce (94,95) positionnée dans l'élément d'outil mobile (22,81,103), de préférence automatiquement, l'élément d'outil mobile (22) étant ensuite amené à l'élément d'outil de base (26).

11 - Procédé pour la fabrication de pièces moulées en matière plastique selon l'une ou plusieurs des revendications 1 à 10, caractérisé en ce qu'après la fabrication de la pièce moulée (2), l'élément d'outil mobile (22,81,103) est amené à une zone de travail (86,87) dans laquelle la pièce moulée (2) est retirée manuellement.

12 - Procédé pour la fabrication de pièces moulées en matière plastique selon l'une ou plusieurs des revendications 1 à 11, caractérisé en ce qu'après la fabrication de la pièce moulée (2), celle-ci est amenée avec l'élément d'outil mobile (22,81,103) dans une zone de travail dans laquelle la pièce moulée est soumise à un traitement thermique.

13 - Installation pour la fabrication de pièces moulées en matière plastique comprenant un dispositif de distribution de la matière plastique et un outil en plusieurs parties, comprenant un élément d'outil de base et un élément d'outil mobile ainsi qu'un dispositif d'éjection,associé à ceux-ci,des pièces moulées,pour mettre en oeuvre le procédé selon l'une des revendications 1 à 13, caractérisée en ce que plusieurs éléments d'outil mobiles (22,81,103) similaires sont disposés sur des supports d'outil (18,102) espacés les uns des autres, pouvant être déplacés indépendamment les uns des autres d'un dispositif de transport,et sont pourvus d'un circuit de chauffage et/ou de refroidissement, et en ce qu'un dispositif de positionnement (19) est associé aux support d'outil (18,102) dans une zone de travail (13,90,91) associée à l'élément d'outil de base (26), et en ce que l'élément d'outil mobile (22,81,103) et l'élément d'outil de base (26) sont logés de façon à pouvoir être déplacés relativement l'un par rapport à l'autre par l'intermédiaire d'un dispositif de réglage (55).

14 - Installation selon la revendication 13, caractérisée en ce qu'un dispositif de centrage et/ou d'arrêt (44,45) est disposé entre l'élément d'outil de base (26) et l'élément d'outil mobile (22,81,103).

15 - Installation selon la revendication 13 ou 14, caractérisée en ce que les éjecteurs (64) sont disposés dans l'élément d'outil mobile (22,81,103) relié au support d'outil (18,102).

16 - Installation selon l'une ou plusieurs des revendications 13 à 15, caractérisée en ce que l'élément d'outil mobile (22,81,103) constitue le support d'outil (18,102).

17 - Installation selon l'une ou plusieurs des revendications 13 à 16, caractérisée en ce que le dispositif de distribution (27) est logé dans un dispositif de guidage (57) de façon réglable au moyen d'un entraînement d'avance (58).

18 - Installation selon l'une ou plusieurs des revendications 13 à 17, caractérisée en ce qu'une direction de déplacement du dispositif de réglage (55), une direction d'avance du dispositif de guidage (57) et une direction de déplacement en avant des supports d'outil (18,102) du dispositif de transport (5,97) s'étendent suivant des angles, notamment perpendiculairement les unes aux autres.

19 - Installation selon l'une ou plusieurs des revendications 13 à 18, caractérisée en ce que le dispositif de transport (5,97) présente des voies de guidage latérales et en hauteur (6 à 8) ainsi qu'un système

17

d'entraînement pour les supports d'outil (18,102).

20 - Installation selon l'une ou plusieurs des revendications 13 à 19, caractérisée en ce que plusieurs zones de travail (13 à 17; 87 à 92) sont disposées le long du dispositif de transport (5,97), dans la direction de déplacement en avant (25) ,à distance les unes des autres.

21 - Installation selon l'une ou plusieurs des revendications 13 à 20, caractérisée en ce qu'il est prévu dans une zone de travail (13) un dispositif d'entraînement (67) d'un dispositif d'éjection pour les éjecteurs (64) disposés dans l'élément d'outil mobile (22,81,103).

22 - Installation selon l'une ou plusieurs des revendications 13 à 21, caractérisée en ce qu'un dispositif de montage (32) pour assembler et/ou relier une autre pièce isolée (35) à la pièce moulée (2)est disposée dans une zone de travail (14,88).

23 - Installation selon l'une ou plusieurs des revendications 13 à 22, caractérisée en ce qu'un dispositif de traitement (36) de la pièce moulée (2) contenue dans un nid formant moule (46) est disposé dans une zone de travail (15).

24 - Installation selon l'une ou plusieurs des revendications 13 à 23, caractérisée en ce qu'un dispositif de nettoyage (20) du nid formant moule (46) dans l'élément d'outil mobile (22,81,103) est disposé dans une zone de travail (17).

25 - Installation selon l'une ou plusieurs des revendications 13 à 24, caractérisée en ce que le nid formant moule (46) est réalisé sous la forme d'un dispositif de réception de montage.

26 - Installation selon l'une ou plusieurs des revendications 13 à 25, caractérisée en ce que l'élément d'outil de base (26) est relié à un dispositif de poursuite s'étendant parallèlement à la direction de poussée en avant (25) du dispositif de transport (5,97).

27 - Installation selon l'une ou plusieurs des revendications 13 à 26, caractérisée en ce que, dans un élément d'outil mobile (22,81,103) sont disposés, sur un support d'outil (18), plusieurs nids formant moules (46) les uns après les autres dans la direction de poussée en avant (25) du dispositif de transport (5,97).

28 - Installation selon l'une ou plusieurs des revendications 13 à 27, caractérisée en ce que des pièces formant inserts et/ou noyaux (47,48) sont disposés dans le nid formant moule (46) de l'élément d'outil mobile (22,81,103), pouvant être retirés et/ou déplacés par rapport à celui-ci.

**Fig . 1**

**Fig . 2**

**Fig . 3**

Fig. 4

**Fig. 5**

EP 0 397 674 B1

Fig . 6